# EUROPEAN PATENT APPLICATION

(11) **EP 3 385 863 A1**
(43) Date of publication of application: **10.10.2018**
(21) Application number: 15911760.5
(22) Date of filing: 29.12.2015
(51) Int. Cl.: G06F 17/30, G06F 3/048

(54) **METHOD OF MANAGING MULTIMEDIA FILES, ELECTRONIC DEVICE, AND GRAPHICAL USER INTERFACE**

(71) Applicant: Huawei Technologies Co., Ltd., Longgang District Shenzhen, Guangdong 518129 (CN)
(72) Inventor: LIU, Jie, Shenzhen Guangdong 518129 (CN)
(74) Representative: Körber, Martin Hans
(86) International application number: PCT/CN2015/099619
(87) International publication number: WO 2017/113131

(57) **Abstract**

A multimedia file management method is provided, and the method includes: classifying, by an electronic device according to a preset rule, multiple multimedia files stored in the electronic device, to obtain at least a first multimedia file set (S201); determining, by the electronic device, one or more multimedia files with a largest quantity of times of a historical user operation in the first multimedia file set as a coordinate file of the first multimedia file set (S203); and performing, by the electronic device, special marking on the coordinate file to differentially display the coordinate file and another multimedia file in the first multimedia file set (S205). According to the method, multimedia file search efficiency can be improved.

## Description

### TECHNICAL FIELD

The present invention relates to the field of electronic devices, and in particular, to a multimedia file management method, an electronic device, and a graphical user interface.

### BACKGROUND

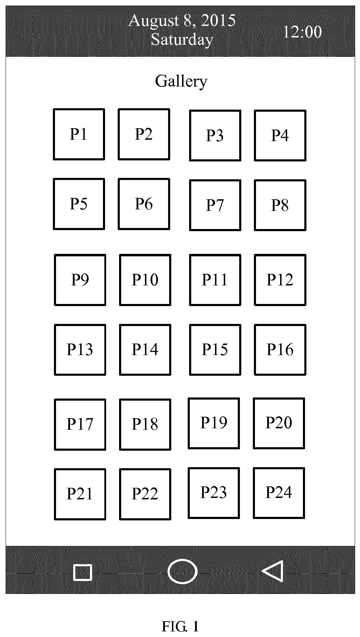

Currently, a storage capacity of an electronic device is increasingly large, and there is a growing quantity of storable multimedia files (such as a photograph, audio, and a video). Therefore, the multimedia files need to be effectively managed. Currently, the electronic device sorts and displays photographs in a single manner, and mainly sorts and displays the photographs in order of shooting times. For example, referring to FIG. 1, FIG. 1 is a schematic screen diagram of a gallery in the prior art. In FIG. 1, all photographs (only a photograph PI to a photograph P24 are displayed on a screen, and a user may flick the screen to browse through another photograph in the gallery) in the gallery are sorted and displayed in order of shooting times. When the user has a vague memory for a shooting time of a target photograph, it is usually relatively time-consuming to find the target photograph from massive photographs. This results in relatively low photograph search efficiency.

In the prior art, the electronic device also classifies photographs in some classification manners for display, for example, classifies the photographs by using geographical location information for display, or classifies the photographs according to different people by using a facial recognition function for display. However, as a photograph quantity gradually increases, the existing simple classification manners for display cannot meet the user's requirement for quickly finding a photograph, and this is inconvenient for the user.

### SUMMARY

To resolve a technical problem, embodiments of the present invention provide a multimedia file management method, an electronic device, and a graphical user interface, so that when searching for a multimedia file, a user quickly finds the required multimedia file according to a coordinate file, thereby improving multimedia file search efficiency, and bringing convenience to the user.

According to a first aspect, the present invention provides a multimedia file management method, applied to an electronic device such as a server (for example, a cloud server), or a terminal with a display panel, for example, a mobile phone, a tablet, a notebook computer, a palmtop computer, a mobile Internet device (MID, mobile Internet device), or a wearable device (for example, a smartwatch (such as an iWatch) or smart glasses), and the method includes:
classifying, according to a preset rule, multiple multimedia files stored in the electronic device, to obtain at least a first multimedia file set, where the first multimedia file set includes icons that are respectively corresponding to multiple multimedia files meeting the preset rule; determining one or more multimedia files with a largest quantity of times of a historical user operation in the first multimedia file set as a coordinate file of the first multimedia file set; and performing special marking on the coordinate file to differentially display the coordinate file and another multimedia file in the first multimedia file set.

The electronic device classifies the multiple stored multimedia files according to the preset rule to obtain each multimedia file set. Multiple multimedia files in each multimedia file set meet at least one rule and are related to each other. In the first multimedia file set, the electronic device determines the multimedia file with the largest quantity of times of the historical user operation as the coordinate file of the first multimedia file set, and performs special marking on the selected coordinate file to differentially display the coordinate file and the another multimedia file in the first multimedia file set. When a user searches for a multimedia file in massive multimedia files, this helps the user quickly find the required multimedia file by using the coordinate file with the largest quantity of times of the historical operation as a search clue, thereby improving multimedia file search efficiency, and bringing convenience to the user.

According to the first aspect, in a first possible implementation of the first aspect, the classifying, according to a preset rule, multiple multimedia files stored in the electronic device includes at least one of the following operations:
grouping, into a multimedia file set according to generation time of the multimedia files, multiple multimedia files that are stored in the electronic device, that are generated on a same date of a same month in a same year, and whose generation quantity in a first preset time period meets a preset condition; grouping, into a multimedia file set according to information about geographical locations at which the multimedia files are generated, multiple multimedia files that are stored in the electronic device and that have same geographical location information; grouping, into a multimedia file set according to generation time of the multimedia files, multiple multimedia files that are stored in the electronic device and that are generated on a same date of a same month; grouping, into a multimedia file set according to generation time of the multimedia files, multiple multimedia files that are stored in the electronic device and whose generation time points are in a second preset time period; grouping, into a multimedia file set according to content of the multimedia files, multiple multimedia files that include one or more specified objects; or grouping, into a multimedia file set according to labels of the multimedia files, multiple multimedia files that are stored in the electronic device and that have a same label.

The electronic device classifies the multiple stored multimedia files according to the foregoing different classification rules to obtain one or more multimedia file sets, and multiple multimedia files in each multimedia file set are related to each other, so that when searching for a multimedia file, the user quickly finds the required multimedia file according to a correlation between multimedia files.

According to the first aspect or the first possible implementation of the first aspect, in a second possible implementation of the first aspect, after the performing special marking on the coordinate file to differentially display the coordinate file and another multimedia file in the first multimedia file set, the method further includes: adding, to the coordinate file, an icon marking the historical user operation. The icon is added to the coordinate file, so that information about the coordinate file can be enriched, and more clues can be provided for search by the user. This helps the user find the required multimedia file more quickly, and brings convenience to the user.

According to any one of the first aspect, or the foregoing possible implementations of the first aspect, in a third possible implementation of the first aspect, after the performing special marking on the coordinate file to differentially display the coordinate file and another multimedia file in the first multimedia file set, the method further includes:
receiving an operation performed by a user on one or more target multimedia files that do not belong to the first multimedia file set, and grouping the one or more target multimedia files into the first multimedia file set if the operation meets a preset first operation; or receiving an operation performed by a user on one or more target multimedia files in the first multimedia file set, and separating the one or more target multimedia files from the first multimedia file set if the operation meets a preset second operation, so that the one or more target multimedia files are no longer grouped into the first multimedia file set.

After the electronic device classifies the multiple multimedia files, the user may further manually adjust a classification result, so that a defect of intelligent classification of the electronic device is remedied, and a personalized requirement of the user is met.

According to any one of the first aspect, or the foregoing possible implementations of the first aspect, in a fourth possible implementation of the first aspect, the determining a multimedia file with a largest quantity of times of a historical user operation in the first multimedia file set as a coordinate file of the target classification file includes:
if there are multiple multimedia files with the largest quantity of times of the historical user operation in the first multimedia file set, determining a middlemost multimedia file as the coordinate file of the first multimedia file set according to generation time of the multimedia files. The electronic device determines the multimedia file with a middlemost generation time as the coordinate file of the first multimedia file set. This helps the user find the required multimedia file based on the coordinate file.

According to any one of the first aspect, or the foregoing possible implementations of the first aspect, in a fifth possible implementation of the first aspect, the special marking is specifically at least one of display by means of enlargement, display by adding a frame, display by adding a mark, display by using a special color, display by using a special pattern, or dynamic display. The coordinate file is highlighted in a first display manner, so that the user clearly sees the coordinate file when browsing through multimedia files.

According to the first aspect, the first possible implementation of the first aspect, the second possible implementation of the first aspect, the third possible implementation of the first aspect, or the fourth possible implementation of the first aspect, in a sixth possible implementation of the first aspect, the performing special marking on the coordinate file to differentially display the coordinate file and another multimedia file in the first multimedia file set includes:
hiding, under the coordinate file, the another multimedia file in the first multimedia file set other than the coordinate file, to differentially display the coordinate file and the another multimedia file in the multimedia file set to which the coordinate file belongs. The coordinate file is displayed on a screen of the electronic device, and the another multimedia file other than the coordinate file is hidden under the coordinate file, so that the coordinate file and the another multimedia file in the multimedia file set to which the coordinate file belongs are displayed in a stack aggregation manner. This can optimize a display manner of the screen of the electronic device, so that the screen is more concise, and efficiency of browsing through multimedia files by the user is improved.

According to any one of the first aspect, or the foregoing possible implementations of the first aspect, in a seventh possible implementation of the first aspect, the historical user operation is specifically at least one of viewing, editing, sharing, marking, or using.

According to any one of the first aspect, or the foregoing possible implementations of the first aspect, in an eighth possible implementation of the first aspect, the first multimedia file set is a folder, and an icon of the folder is an icon of the coordinate file. The user may learn, by using the coordinate file, whether a multimedia file for which the user wants to search is related to the coordinate file, and then the coordinate file is used to provide a clue for search by the user.

According to a second aspect, the present invention provides an electronic device, the electronic device is configured to perform the foregoing multimedia file management method, and the electronic device includes a module or a unit for performing the foregoing multimedia file management method.

The electronic device classifies multiple stored multimedia files according to a preset rule to obtain each multimedia file set. Multiple multimedia files in each multimedia file set meet at least one rule and are related to each other. In a first multimedia file set, the electronic device determines a multimedia file with a largest quantity of times of a historical user operation as a coordinate file of the first multimedia file set, and performs special marking on the selected coordinate file to differentially display the coordinate file and another multimedia file in the first multimedia file set. When a user searches for a multimedia file in massive multimedia files, this helps the user quickly find the required multimedia file by using the coordinate file with the largest quantity of times of the historical operation as a search clue, thereby improving multimedia file search efficiency, and bringing convenience to the user. In addition, after the electronic device classifies the multiple multimedia files, the user may further manually adjust a classification result, so that a defect of intelligent classification of the electronic device is remedied, and a personalized requirement of the user is met.

According to a third aspect, the present invention provides an electronic device, the electronic device includes an input apparatus, an output apparatus, one or more processors, a memory, and one or more computer programs, the one or more computer programs are stored in the memory and are configured for execution by the one or more processors, and the one or more processors are configured to perform the foregoing multimedia file management method.

The electronic device classifies multiple stored multimedia files according to a preset rule to obtain each multimedia file set. Multiple multimedia files in each multimedia file set meet at least one rule and are related to each other. In a first multimedia file set, the electronic device determines a multimedia file with a largest quantity of times of a historical user operation as a coordinate file of the first multimedia file set, and performs special marking on the selected coordinate file to differentially display the coordinate file and another multimedia file in the first multimedia file set. When a user searches for a multimedia file in massive multimedia files, this helps the user quickly find the required multimedia file by using the coordinate file with the largest quantity of times of the historical operation as a search clue, thereby improving multimedia file search efficiency, and bringing convenience to the user. In addition, after the electronic device classifies the multiple multimedia files, the user may further manually adjust a classification result, so that a defect of intelligent classification of the electronic device is remedied, and a personalized requirement of the user is met.

According to a fourth aspect, the present invention provides a graphical user interface on an electronic device, where the electronic device includes a display, one or more user input devices, a memory, and one or more processors for executing one or more computer programs stored in the memory, and the graphical user interface includes at least a first multimedia file icon indicating a first multimedia file and a second multimedia file icon indicating a second multimedia file or a folder.

The first multimedia file icon is displayed on the display in a first display manner, the second multimedia file icon is displayed on the display in a second display manner, and the first display manner is different from the second display manner;
a combination operation performed by a user for combining the second multimedia file icon with the first multimedia file icon is detected; and
in response to the detected combination operation, the first multimedia file icon is still displayed on the display in the first display manner, but displaying the second multimedia file icon is stopped. Different multimedia files can be differentially displayed, so that the user views a required multimedia file accordingly, and can manage and classify a multimedia file icon conveniently and quickly. In this way, a display manner of the graphical user interface is optimized, and the graphical user interface is more concise.

According to the fourth aspect, in a first possible implementation of the fourth aspect, the graphical user interface further includes the following function:
in response to a detected marking operation performed by the user on the first multimedia file icon, additionally displaying, on the display, an icon marking the historical user operation. This helps the user learn of detailed information about the first multimedia file, or helps the user add an icon to the first multimedia file conveniently and quickly, so as to help the user view the detailed information about the first multimedia file subsequently.

According to the fourth aspect, or the first possible implementation of the fourth aspect, in a second possible implementation of the fourth aspect, the first display manner is specifically at least one of display by means of enlargement, display by adding a frame, display by adding a mark, display by using a special color, display by using a special pattern, or dynamic display. A coordinate file is highlighted in the first display manner, so that the user clearly sees the coordinate file when browsing through multimedia files.

According to any one of the fourth aspect, or the foregoing possible implementations of the fourth aspect, in a third possible implementation of the fourth aspect, the combination operation of combining the second multimedia file icon with the first multimedia file icon is specifically: dragging the second multimedia file icon to the first multimedia file icon. The multimedia file icons are combined conveniently and quickly in a drag manner.

According to any one of the fourth aspect, or the foregoing possible implementations of the fourth aspect, in a fourth possible implementation of the fourth aspect, the opening operation on the first multimedia file icon is specifically at least one of a pressing operation, a sliding operation, or a floating operation that meets a preset condition, and the opening operation is different from the combination operation. The combined multimedia file icons are opened conveniently and quickly by performing the pressing operation, the sliding operation, the floating operation, or the like.

According to a fifth aspect, the present invention provides a computer readable storage medium, where the computer readable storage medium stores one or more computer programs, the one or more computer programs include an instruction, an electronic device including a display and one or more application programs performs the foregoing multimedia file management method when the instruction is executed by the electronic device, and the display includes a touch-sensitive surface and a display panel.

The electronic device classifies multiple stored multimedia files according to a preset rule by executing the computer program, to obtain each multimedia file set. Multiple multimedia files in each multimedia file set meet at least one rule and are related to each other. In a first multimedia file set, the electronic device determines a multimedia file with a largest quantity of times of a historical user operation as a coordinate file of the first multimedia file set, and performs special marking on the selected coordinate file to differentially display the coordinate file and another multimedia file in the first multimedia file set. When a user searches for a multimedia file in massive multimedia files, this helps the user quickly find the required multimedia file by using the coordinate file with the largest quantity of times of the historical operation as a search clue, thereby improving multimedia file search efficiency, and bringing convenience to the user. In addition, after the electronic device classifies the multiple multimedia files, the user may further manually adjust a classification result, so that a defect of intelligent classification of the electronic device is remedied, and a personalized requirement of the user is met.

The foregoing aspects of the present invention are clearer and more comprehensible in the description of the following multiple embodiments.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic screen diagram of a gallery in the prior art;
FIG. 2A is a schematic flowchart of a multimedia file management method according to an embodiment of the present invention;
FIG. 2B is a schematic diagram of coordinates of a quantity of shot photographs and a time according to an embodiment of the present invention;
FIG. 2C is a schematic screen diagram of a gallery according to an embodiment of the present invention;
FIG. 2D is a schematic screen diagram of another gallery according to an embodiment of the present invention;
FIG. 2E is a schematic screen diagram of another gallery according to an embodiment of the present invention;
FIG. 3A is a schematic flowchart of another multimedia file management method according to an embodiment of the present invention;
FIG. 3B is a schematic screen diagram of another gallery according to an embodiment of the present invention;
FIG. 3C is a schematic screen diagram of another gallery according to an embodiment of the present invention;
FIG. 3D is a schematic screen diagram of another gallery according to an embodiment of the present invention;
FIG. 3E is a schematic screen diagram of another gallery according to an embodiment of the present invention;
FIG. 3F is a schematic screen diagram of another gallery according to an embodiment of the present invention;
FIG. 4A is a schematic flowchart of another multimedia file management method according to an embodiment of the present invention;
FIG. 4B is a schematic screen diagram of another gallery according to an embodiment of the present invention;
FIG. 4C is a schematic screen diagram of another gallery according to an embodiment of the present invention;
FIG. 4D is a schematic screen diagram of another gallery according to an embodiment of the present invention;
FIG. 5A is a schematic structural diagram of an electronic device according to an embodiment of the present invention;
FIG. 5B is a schematic structural diagram of another electronic device according to an embodiment of the present invention;
FIG. 5C is a schematic structural diagram of another electronic device according to an embodiment of the present invention;
FIG. 6 is a schematic structural diagram of another electronic device according to an embodiment of the present invention;
FIG. 7A is a schematic diagram of a graphical user interface according to an embodiment of the present invention;
FIG. 7B is a schematic diagram of another graphical user interface according to an embodiment of the present invention;
FIG. 7C is a schematic diagram of another graphical user interface according to an embodiment of the present invention;
FIG. 7D is a schematic diagram of another graphical user interface according to an embodiment of the present invention;
FIG. 7E is a schematic diagram of another graphical user interface according to an embodiment of the present invention; and
FIG. 7F is a schematic diagram of another graphical user interface according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

An electronic device described in the following embodiments includes but is not limited to a server (for example, a cloud server), or a terminal with a display panel, for example, a mobile phone, a tablet computer, a notebook computer, a palmtop computer, a mobile Internet device, or a wearable device (for example, a smartwatch (such as an iWatch) or smart glasses). "Multiple" is used to describe at least two items, that is, two or more items.

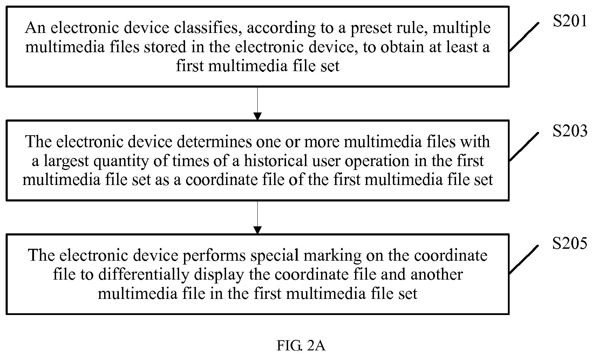

Referring to FIG. 2A, FIG. 2A is a schematic flowchart of a multimedia file management method according to an embodiment of the present invention. The multimedia file management method is applied to an electronic device, and the method includes but is not limited to the following steps.

S201. The electronic device classifies, according to a preset rule, multiple multimedia files stored in the electronic device, to obtain at least a first multimedia file set, where the first multimedia file set includes icons that are respectively corresponding to multiple multimedia files meeting the preset rule.

Specifically, the electronic device classifies, according to the preset rule, the multiple multimedia files stored in the electronic device, to obtain one or more multimedia file sets. The one or more multimedia file sets include the first multimedia file set, and the "multiple" multimedia files include at least two multimedia files. There may be one or more preset rules. When there is one preset rule, the electronic device may obtain one or more multimedia file sets after classifying the multiple multimedia files stored in the electronic device. When there are multiple preset rules, the electronic device may also obtain one or more multimedia file sets after classifying the multiple multimedia files stored in the electronic device. For a multimedia file set, multiple multimedia files included in the multimedia file set have at least one common feature. Therefore, the multiple multimedia files in the multimedia file set are related to each other. The operation of classifying, by the electronic device, the multiple multimedia files stored in the electronic device may be automatically performed by the electronic device, or may be performed by the electronic device after the electronic device receives a classification instruction entered by a user. This is not specifically limited in this embodiment of the present invention. The multimedia file includes but is not limited to a photograph, a picture, audio, a video, a document, and the like. The icon includes but is not limited to a thumbnail corresponding to the photograph, a thumbnail corresponding to the picture, an icon corresponding to the audio file, a picture corresponding to the video file, an icon corresponding to the document, and the like.

After the electronic device classifies the multiple multimedia files stored in the electronic device, multiple multimedia files included in a multimedia file storage area such as a gallery (including a cloud album (the multiple multimedia files are synchronized to cloud after being classified by a terminal, or the multiple multimedia files are directly classified in cloud), a local album, and the like) or a folder may be displayed according to a classification result. Therefore, a display manner of the multiple multimedia files in the multimedia file storage area such as the gallery or the folder may be optimized, so that the user finds a required multimedia file more quickly in a classified display manner.

It should be noted that, the first multimedia file set may be a folder, that is, after classifying the multiple multimedia files stored in the electronic device, the electronic device adds, to a folder for display by classification, icons that are respectively corresponding to multiple multimedia files belonging to a same classification, and the folder includes the icons that are respectively corresponding to the multiple multimedia files meeting the preset rule; or the first multimedia file set may be a set of the icons that are respectively corresponding to the multiple multimedia files meeting the preset rule, that is, after classifying the multiple multimedia files stored in the electronic device, the electronic device gathers, for display by classification, icons that are respectively corresponding to multiple multimedia files belonging to a same classification. There may be or may not be a classification indication line between two neighboring multimedia file sets. This is not specifically limited in this embodiment of the present invention.

For example, the electronic device stores six photographs P1, P2, P3, P4, P5, and P6, and there is one preset rule. If the preset rule is that classification is performed according to months in which shooting is performed, the electronic device performs classification according to the preset rule to obtain two photograph sets: a photograph set 1 (including the photographs P1, P2, and P3) and a photograph set 2 (including the photographs P4, P5, and P6). The three photographs P1, P2, and P3 in the photograph set 1 are a photograph set meeting the preset rule. For example, all the three photographs are shot in January, 2015. The three photographs P4, P5, and P6 in the photograph set 2 are another photograph set meeting the preset rule. For example, all the three photographs are shot in March, 2015. The first multimedia file set in this embodiment of the present invention may be the photograph set 1 or the photograph set 2.

Optionally, the classifying, according to a preset rule, multiple multimedia files stored in the electronic device includes at least one of the following operations:
grouping, into a multimedia file set according to generation time of the multimedia files, multiple multimedia files that are stored in the electronic device, that are generated on a same date of a same month in a same year, and whose generation quantity in a first preset time period meets a preset condition;
grouping, into a multimedia file set according to information about geographical locations at which the multimedia files are generated, multiple multimedia files that are stored in the electronic device and that have same geographical location information;
grouping, into a multimedia file set according to generation time of the multimedia files, multiple multimedia files that are stored in the electronic device and that are generated on a same date of a same month;
grouping, into a multimedia file set according to generation time of the multimedia files, multiple multimedia files that are stored in the electronic device and whose generation time points are in a second preset time period;
grouping, into a multimedia file set according to content of the multimedia files, multiple multimedia files that include one or more specified objects; or
grouping, into a multimedia file set according to labels of the multimedia files, multiple multimedia files that are stored in the electronic device and that have a same label.

It should be noted that, the preset rule in this embodiment of the present invention is not limited to the foregoing six classification manners. A user may customize a rule. For example, for a photograph, multiple photographs stored in the electronic device may be classified according to a parameter such as an aperture, a shutter speed, a filter type, or a focal length. For a video, multiple videos stored in the electronic device may be classified according to a type of software used during recording, recording duration, a language used in the videos, or the like.

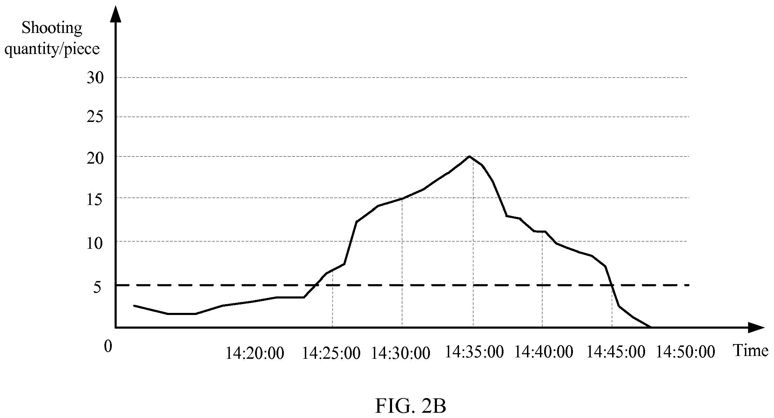

Specifically, in the first classification manner, the electronic device groups, into a multimedia file set, the multiple multimedia files (for example, continuously shot photographs or continuously recorded videos) that are generated on a same date and whose generation quantity in the first preset time period meets the preset condition. The first preset time period may be 15 consecutive minutes, two consecutive hours, three consecutive hours, or the like; the first preset time period may be at least 15 minutes, at least one hour, at least two hours, or the like; or the first preset time period may be a time period determined by using two specific time points, for example, 14:00:00-14:20:00 or 15:00:00-16:00:00. The preset condition may be: a quantity of multimedia files generated at each time point (hour-minute-second) in the first preset time period is greater than or equal to a first preset value, and the first preset value may be 5, 10, 15, or the like. Alternatively, the preset condition may be: a total quantity of multimedia files generated in the first preset time period is greater than or equal to a second preset value, and the second preset value may be 20, 30, 50, or the like. In an example of photographs, referring to FIG. 2B, FIG. 2B is a schematic diagram of a coordinate axis of a quantity of shot photographs and a time according to an embodiment of the present invention. FIG. 2B is a line graph of a quantity of shot photographs and a time. A lateral axis is corresponding to each time point (not all time points are marked in the line graph) on a date (for example, January 1, 2015). A vertical axis represents a quantity of photographs shot at each time point. The preset condition is: multiple photographs whose quantities corresponding to all time points in at least 20 minutes reach the preset value 5 are classified into a photograph set (that is, a multimedia file set). It can be learned from FIG. 2B that, quantities of shot photographs corresponding to five time points: 14:25:00, 14:30:00, 14:35:00, 14:40:00, and 14:45:00 in a time period 14:25:00-14:45:00 of 20 consecutive minutes are respectively 7, 15, 20, 12, and 5. The quantities of shot photographs corresponding to all the time points in the time period are greater than or equal to the preset value 5 (that is, shooting quantities at all points on a curve corresponding to the time period reach the preset value). Therefore, the electronic device classifies, into a photograph set, all photographs shot in the time period 14:25:00-14:45:00. In another example of photographs, if a user performs continuous shooting in two consecutive hours on January 1, 2015, the two consecutive hours are specifically 14:30:00-16:30:00 on January 1, 2015, and a total quantity of shot photographs is 50, which is greater than or equal to the preset value 30, the electronic device classifies, into a photograph set, the 50 photographs that are continuously shot in 14:30:00-16:30:00 on January 1, 2015. If the user further performs continuous shooting in three consecutive hours on March 3, 2015, the three consecutive hours are specifically 12:00:00-15:00:00 on March 3, 2015, and a total quantity of shot photographs are 70, which is greater than or equal to the preset value 30, the electronic device classifies, into another photograph set, the 70 photographs that are continuously shot in 12:00:00-15:00:00 on March 3, 2015. When the user is on a trip or participates in an activity such as a party or a meeting, the continuous shooting operation is performed in a period of time on a same date. For the user, multiple continuously-generated multimedia files are usually related to each other, and the user may associate a multimedia file in the multiple continuously-generated multimedia files with another multimedia file generated in a same time period. Therefore, this classification manner may provide the user with a search clue when the user searches for a multimedia file.

In the second classification manner, the electronic device groups, into a multimedia file set, the multiple multimedia files having same geographical location information. In an example of photographs, the geographical location information may be a shooting location. The shooting location may be classified according to administrative regions. For example, multiple photographs whose shooting locations belong to Guangdong are classified into a photograph set, and multiple photographs whose shooting locations belong to Zhejiang are classified into another photograph set; or multiple photographs whose shooting locations belong to Shenzhen, Guangdong are classified into a photograph set, and multiple photographs whose shooting locations belong to Hangzhou, Zhejiang are classified into another photograph set. Alternatively, the shooting location may be further classified according to districts and counties. For example, multiple photographs whose shooting locations belong to Futian District, Shenzhen, Guangdong are classified into a photograph set, and multiple photographs whose shooting locations belong to Nanshan District, Shenzhen, Guangdong are classified into another photograph set. Alternatively, the shooting location may be specific address information. For example, multiple photographs whose shooting locations belong to No. 1, First Street, Nanshan District, Shenzhen, Guangdong are classified into a photograph set, and multiple photographs whose shooting locations belong to No. 1, Second Street, Nanshan District, Shenzhen, Guangdong are classified into another photograph set. Alternatively, the shooting location may be other geographical location information, for example, Shenzhen Shun Hing Square, Shenzhen Dameisha Beach Park, and Shenzhen University. Multiple photographs whose shooting locations belong to Shenzhen Shun Hing Square are classified into a photograph set, multiple photographs whose shooting locations belong to Shenzhen Dameisha Beach Park are classified into another photograph set, and multiple photographs whose shooting locations belong to Shenzhen University are classified into another photograph set. Alternatively, the shooting location may be classified according to GPS location information, and may be specifically longitude and latitude information. For example, multiple photographs whose shooting locations belong to 113°46'-114°37' east longitude and 22°27'-22°52' north latitude are classified into a photograph set, and multiple photographs whose shooting locations belong to 114°42'-115°22' east longitude and 25°26'-26°17' north latitude are classified into another photograph set. Alternatively, the shooting location may be classified according to a distance, and locations within a preset distance range are regarded as a same shooting location. For example, a preset distance is 20 kilometers, and multiple photographs whose shooting locations are within a range of 20 kilometers are classified into a photograph set. For a user, multiple multimedia files having same geographical location information are usually related to each other, and the user may associate a multimedia file in the multiple multimedia files having the same geographical location information with another multimedia file generated at a same geographical location. Therefore, this classification manner may provide the user with a search clue when the user searches for a multimedia file.

In the third classification manner, the electronic device groups, into a multimedia file set, multiple multimedia files that are generated on a same date or several same dates of different years. The different years may be M (M≥2) consecutive years, or M (M≥2) non-consecutive years. For example, on a same date (January 1) of two consecutive years (2014 and 2015), if a user shoots N (N≥1) photographs (a quantity of photographs shot on January 1, 2014 may be the same as or different from a quantity of photographs shot on January 1, 2015, and this is not specifically limited in this embodiment of the present invention), the electronic device considers that the date (that is, January 1) is special for the user, and the electronic device groups, into a multimedia file set, the photographs shot on January 1, 2014 and the photographs shot on January 1, 2015. On a same date (March 3) of three non-consecutive years (2012, 2013, and 2015), if the user shoots N (N≥1) photographs (a quantity of photographs shot on March 3, 2012, a quantity of photographs shot on March 3, 2013, and a quantity of photographs shot on March 3, 2015 may be the same or different, and this is not specifically limited in this embodiment of the present invention), and records Q (Q≥1) videos (a quantity of videos recorded on March 3, 2012, a quantity of videos recorded on March 3, 2013, and a quantity of videos recorded on March 3, 2015 may be the same or different, and this is not specifically limited in this embodiment of the present invention), the electronic device classifies, into another multimedia file set, the photographs shot on March 3, 2012, the videos recorded on March 3, 2012, the photographs shot on March 3, 2013, the videos recorded on March 3, 2013, the photographs shot on March 3, 2015, and the videos recorded on March 3, 2015. For the user, multiple multimedia files that are generated on a same date or several same dates of different years are usually related to each other, and the user may associate a multimedia file in the multimedia file set with other multimedia files generated together with the multimedia file on a same date or several same dates. Therefore, this classification manner may provide the user with a search clue when the user searches for a multimedia file.

In the fourth classification manner, the electronic device groups, into a multimedia file set, the multiple multimedia files generated in the second preset time period on a same date or different dates, that is, the electronic device groups, into a multimedia file set, the multiple multimedia files with a regular time period or time point. The second preset time period may be 07:45:00-08:00:00, 11:45:00-12:00:00, 17:45:00-18:00:00, or the like. In an example of photographs, if a user is accustomed to shoot food, a day may be divided by time periods. For example, multiple photographs whose shooting time points belong to the time period 07:45:00-08:00:00 are classified into a photograph set as morning photographs, multiple photographs whose shooting time points belong to the time period 11:45:00-12:00:00 are classified into another photograph set as noon photographs, and multiple photographs whose shooting time points belong to the time period 17:45:00-18:00:00 are classified into another photograph set as evening photographs. For the user, multiple multimedia files generated in a same time period on different dates are usually related to each other, and the user may associate a multimedia file in the multiple multimedia files generated in the time period with another multimedia file generated together with the multimedia file in the same time period. Therefore, this classification manner may provide the user with a search clue when the user searches for a multimedia file.

In the fifth classification manner, the electronic device classifies the multiple multimedia files having the one or more specified objects into a multimedia file set. The specified object includes but is not limited to a person, an animal, a plant, a building, or the like. In an example of photographs, the electronic device may perform image recognition on the photographs to determine an object included in each photograph, so as to classify multiple photographs having one or more specified objects into a photograph set. The electronic device classifies multiple photographs including Zhang San into a photograph set, and classifies multiple photographs including Li Si into another photograph set; or classifies multiple photographs including the Great Wall into a photograph set, and classifies multiple photographs including the Tian'anmen into a photograph set. For a user, multiple multimedia files having a same specified object are usually related to each other, and the user may associate a multimedia file in the multimedia file set with another multimedia file that has a same specified object as that of the multimedia file. Therefore, this classification manner may provide the user with a search clue when the user searches for a multimedia file.

In the sixth classification manner, the electronic device classifies the multiple multimedia files having a same label into a multimedia file set. In an example of photographs, a user may manually add a label to each photograph, for example, friend, classmate, family, client, parent-child, furniture, scenery, fitness, shopping, food, travel, WeChat, or QQ. The electronic device classifies multiple photographs having a same label into a photograph set according to a label of each photograph. For example, the electronic device classifies multiple photographs having a same label "WeChat" (indicating that this type of photographs are shared to WeChat, for example, shared to a WeChat friend, or shared to WeChat Moments) into a photograph set, and classifies multiple photographs having a same label "QQ" (indicating that this type of photographs are shared to QQ, for example, shared to a QQ friend, or shared to Qzone) into another photograph set; or classifies multiple photographs having a same label "classmate" into a photograph set, and classifies multiple photographs having a same label "client" into another photograph set. For the user, multiple multimedia files having a same label are usually related to each other, and the user may associate a multimedia file in the multimedia file set with another multimedia file that has a same label as that of the multimedia file. Therefore, this classification manner may provide the user with a search clue when the user searches for a multimedia file.

It should be noted that, the electronic device or the user may perform priority sorting on the foregoing preset rules in advance. For example, the first classification manner is set to a first priority, the second classification manner is set to a second priority, the third classification manner is set to a third priority, the fourth classification manner is set to a fourth priority, the fifth classification manner is set to a fifth priority, and the sixth classification manner is set to a sixth priority. The priorities may be sorted in another sequence, and this is not specifically limited in this embodiment of the present invention. Therefore, if a multimedia file meets at least two of the foregoing preset rules, the multimedia file is classified according to a preset rule with a highest priority. For example, if a multimedia file may be not only classified into a multimedia file set in the first classification manner, but also may be classified into another multimedia file set in the second classification manner, according to the priority sequence, the multimedia file is classified only in the first classification manner. Alternatively, the multimedia file may be separately classified according to all different preset rules that the multimedia file meets, so that the multimedia file is classified into at least two multimedia file sets. Therefore, the multimedia file appears at least two times in multimedia file storage areas such as a gallery and a folder. Alternatively, the foregoing preset rules may be presented on a display screen of the electronic device for selection by the user. After the user selects a preset rule, the electronic device classifies the multimedia file according to the preset rule selected by the user. Further, if the user does not select a preset rule in a preset period of time, the electronic device selects a preset rule with a highest priority by default according to the priority sequence, to classify the multimedia file. The preset period of time may be one minute, two minutes, three minutes, or the like. There may be a default preset period of time in a system, and the user may modify the preset period of time.

S203. The electronic device determines one or more multimedia files with a largest quantity of times of a historical user operation in the first multimedia file set as a coordinate file of the first multimedia file set.

Specifically, after the electronic device classifies the multiple multimedia files stored in the electronic device, the electronic device determines the one or more multimedia files with the largest quantity of times of the historical user operation in the first multimedia file set as the coordinate file of the first multimedia file set. The coordinate file is used as an iconic multimedia file of the first multimedia file set, and the user may associate the coordinate file with another multimedia file that is related to the coordinate file. Therefore, when the user searches for a multimedia file, the coordinate file may provide a reference for the user, so that the user quickly finds the required multimedia file based on the coordinate file. The historical user operation includes but is not limited to viewing, editing, sharing, marking, using, or the like. For a photograph or a picture, the editing includes but is not limited to: modifying a name, adding a frame, adding a scenario, adding an accessory, facial beautifying, splicing pictures, tailoring, or the like. For audio or a video, the editing includes but is not limited to: modifying a name, adjusting a sound effect, adding a special effect, subtitling, recording, editing, and the like. For a document, the editing includes but is not limited to: modifying a name, converting a format, editing content, or the like. The sharing includes but is not limited to: sharing to an instant messaging application or publishing to cyberspace, for example, sharing to a WeChat friend, sharing to a QQ friend, sharing to a Renren friend, sharing to a Weibo friend, sharing to a Tieba friend, sharing to WeChat Moments, sharing to Qzone, sharing to Renren, sharing to Weibo, or sharing to Tieba. The marking includes but is not limited to: adding a time mark, adding a character name mark, adding a location mark, editing a mark, deleting a mark, or the like. The using includes but is not limited to: splicing pictures, making a poster, adding to another file as a material, or the like. The electronic device records a quantity of times, of a historical user operation, corresponding to each multimedia file. If there is one multimedia file with the largest quantity of times of the historical user operation in the first multimedia file set, the electronic device determines the multimedia file with the largest quantity of times of the historical user operation as the coordinate file of the first multimedia file set. If there are multiple multimedia files with the largest quantity of times of the historical user operation in the first multimedia file set, the electronic device may select one or more multimedia files from the multiple multimedia files, and determine the selected one or more multimedia files as the coordinate file of the first multimedia file set. A quantity of coordinate files may be edited or selected by the user.

It should be noted that, for another multimedia file set other than the first multimedia file set, one or more multimedia files with a largest quantity of times of a historical user operation may be similarly determined in each multimedia file set as a coordinate file of the multimedia file set, or a coordinate file of each multimedia file set may be determined in another manner, and this is not specifically limited in this embodiment of the present invention. The another manner includes but is not limited to: an earliest generation time, or a largest quantity of included characters (when a multimedia file is a photograph, a picture, a video, or the like). Alternatively, the another manner may be: the user manually selects a coordinate file of each multimedia file set other than the first multimedia file set. In addition, after the electronic device determines the coordinate file of the first multimedia file set, the user may cancel the coordinate file at any time, and manually select another multimedia file in the first multimedia file set as a coordinate file, so that a personalized requirement of the user is met.

It should be noted that, after the electronic device determines the coordinate file of the first multimedia file set, if the user performs a new operation on a multimedia file in the first multimedia file set, and learns, by statistics collection, that a quantity of times of a historical user operation on the multimedia file exceeds a previously determined quantity of times of a historical user operation on the coordinate file, the electronic device may re-determine the coordinate file. In this way, the electronic device may update the coordinate file in real time in a use process of the user, so that the user is always relatively impressed with the coordinate file.

Optionally, when the user performs an operation on any multimedia file stored in the electronic device, the electronic device records this operation of the user, and updates a quantity of times, of a historical user operation, corresponding to the multimedia file. The electronic device may create a historical operation recording table for each multimedia file, and the historical operation recording table may include a multimedia file name, a historical user operation name, a quantity of times of a historical user operation, and the like. Each time the user performs an operation on a multimedia file, the electronic device needs to update a quantity of times, of a historical user operation, corresponding to the multimedia file. When recording a historical user operation name corresponding to a multimedia file, the electronic device may record a historical user operation name of each time one by one according to a sequence of historical operations performed by the user on the multimedia file, or may summarize a same historical user operation, and collect statistics about a quantity of times of each historical user operation for record by classification. This is not specifically limited in this embodiment of the present invention.

For example, the electronic device classifies six photographs P1, P2, P3, P4, P5, and P6 stored in a gallery, to obtain two photograph sets: a photograph set 1 (including the photographs P1, P2, and P3) and a photograph set 2 (including the photographs P4, P5, and P6). The first multimedia file set is the photograph set 1. A historical operation recording table recorded in the electronic device is shown in Table 1.

**Table 1**

| **Multimedia file name** | **Historical user operation name** | **Quantity of times of a historical user operation** |
|---|---|---|
| P1 | Viewing 1, editing 2, and sharing 1 | 4 |
| P2 | Sharing 5 | 5 |
| P3 | Marking 1 | 1 |
| P4 | Viewing 1 and editing 1 | 2 |
| P5 | - | 0 |
| P6 | Viewing 1 | 1 |

It can be learned from Table 1 that, for the photograph set 1, a photograph with a largest quantity of times of a historical user operation is P2, and therefore, the electronic device uses P2 as a coordinate file of the photograph set 1. For the photograph set 2, if the electronic device similarly determines a coordinate file according to a quantity of times of a historical user operation, the electronic device determines P4 with a largest quantity of times of a historical user operation in the photograph set 2 as a coordinate file of the photograph set 2.

Optionally, the determining a multimedia file with a largest quantity of times of a historical user operation in the first multimedia file set as a coordinate file of the target classification file includes:
if there are multiple multimedia files with the largest quantity of times of the historical user operation in the first multimedia file set, determine a middlemost multimedia file as the coordinate file of the first multimedia file set according to generation time of the multimedia files.

Specifically, if there are multiple multimedia files with the largest quantity of times of the historical user operation in the first multimedia file set, all quantities of times of the historical user operation are 0, or not all quantities of times of the historical user operation are 0. For the case in which all the quantities of times of the historical operation are 0, for example, if the first multimedia file set includes five videos, and all the five videos are not operated by the user, the electronic device may select a video with a middlemost generation time in the five videos (when there is only one video with the middlemost generation time) as the coordinate file of the first multimedia file set; or if there are multiple videos with a middlemost generation time, the electronic device may select any one of the multiple multimedia files as the coordinate file of the first multimedia file set. This is not specifically limited in this embodiment of the present invention. In addition, the electronic device may select a video with an earliest or a latest generation time in the five videos as the coordinate file of the first multimedia file set. For the case in which not all the quantities of times of the historical operation are 0, for example, if the first multimedia file set includes five videos, and quantities of times of a historical user operation on the five videos are respectively 1, 0, 3, 3, and 3, the electronic device may determine all three videos with a largest quantity of times of the historical user operation as the coordinate file of the first multimedia file set, or the electronic device selects a middlemost video as the coordinate file of the first multimedia file set according to generation time of the three videos (when there is only one video with a middlemost generation time), or selects a video with a largest quantity of times of historical user editing (a largest quantity of times of historical using, a largest quantity of times of historical viewing, or the like) in the three videos as the coordinate file of the first multimedia file set, or selects any one of the three videos as the coordinate file of the first multimedia file set. This is not specifically limited in this embodiment of the present invention.

S205. The electronic device performs special marking on the coordinate file to differentially display the coordinate file and another multimedia file in the first multimedia file set.

Specifically, display manners of the coordinate file and the another multimedia file in the first multimedia file set are different. The special marking includes but is not limited to: display by means of enlargement, display by adding a frame, display by adding a mark, display by using a special color, display by using a special pattern, or dynamic display. Same special marking or different special marking may be performed on coordinate files of different multimedia file sets, and this is not specifically limited in this embodiment of the present invention. The electronic device may perform special marking on the coordinate file by highlighting the coordinate file in a multimedia file storage area such as a gallery or a folder, so that the user quickly browses through multimedia files, clearly sees the coordinate file when performing flick browsing on the multimedia files, and quickly finds a required multimedia file based on the highlighted coordinate file.

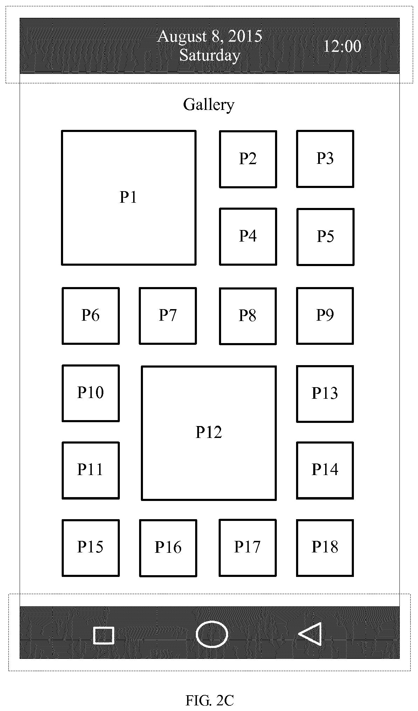

For example, referring to FIG. 2C, FIG. 2C is a schematic screen diagram of a gallery according to an embodiment of the present invention. In FIG. 2C, a photograph P1 is a coordinate photograph (that is, a coordinate file) of a photograph set, and a photograph P12 is a coordinate photograph of another photograph set. Photographs: P2, P3, P4, P5, and P6 are other photographs belonging to a same photograph set as that of the coordinate photograph P1, and photographs P7, P8, P9, P10, P11, P13, P14, P15, P16, P17, and P18 are other photographs belonging to a same photograph set as that of the coordinate photograph P12. A display manner of the coordinate photograph P1 and the coordinate photograph P12 is display by means of enlargement. A display manner of the other non-coordinate photographs is a display manner of a thumbnail in the prior art. Therefore, when searching for a photograph in the gallery, the user can clearly see a coordinate photograph in a flick browsing process, and then quickly find the required photograph by using the coordinate photograph as a search clue, so that search efficiency is improved. It should be noted that, the coordinate photograph P1 and the coordinate photograph P12 may be sorted in order of shooting times, the photographs P2, P3, P4, P5, and P6 that belong to the same photograph set as that of the coordinate photograph P1 may also be sorted in order of shooting times, and the photographs P7, P8, P9, P10, P11, P13, P14, P15, P16, P17, and P18 that belong to the same photograph set as that of the coordinate photograph P12 may also be sorted in order of shooting times. Certainly, the coordinate photographs may be sorted in another manner, and photographs in a same photograph set may also be sorted in another manner. This is not specifically limited in this embodiment of the present invention. In addition, in a photograph set, a coordinate photograph may be at a foremost location of the photograph set, or may be at a middlemost location of the photograph set, or may be at a backmost location of the photograph set, or may be at a location at which the coordinate photograph should be located in a time sequence, or may be at any location in the photograph set. This is not specifically limited in this embodiment of the present invention.

Optionally, a specific manner of performing, by the electronic device, special marking on the coordinate file to differentially display the coordinate file and another multimedia file in the first multimedia file set may be:
hiding, by the electronic device under the coordinate file, the another multimedia file in the first multimedia file set other than the coordinate file, to differentially display the coordinate file and the another multimedia file in the first multimedia file set.

Specifically, the electronic device may perform stack display on multimedia files in the first multimedia file set, to display the coordinate file of the first multimedia file set at the top of a screen of the electronic device, and hide, under the coordinate file, the another multimedia file other than the coordinate file. This stack display manner may also be used for another multimedia file set other than the first multimedia file set, to display a coordinate file of each multimedia file set at the top of a screen, and hide, under the corresponding coordinate file, another multimedia file other than the coordinate file. This display manner can optimize a display effect in a multimedia file storage area such as a gallery or a folder, so that a screen of the storage area such as the gallery or the folder is more concise. The user may associate a directly displayed coordinate file with another multimedia file related to the coordinate file. If the coordinate file is related to a multimedia file for which the user needs to search, the user may view another multimedia file under the coordinate file by performing an opening operation, so that the user quickly finds the required multimedia file by using the directly displayed coordinate file. When the electronic device receives the opening operation performed by the user on the coordinate file, the electronic device displays the another multimedia file under the coordinate file. When the electronic device receives a viewing operation performed by the user on the coordinate file, the electronic device may directly output content information (displaying a photograph, displaying a picture, playing music, playing a video, opening a document, or the like) corresponding to the coordinate file without displaying the another multimedia file under the coordinate file, and then display the content information of the coordinate file by receiving the viewing operation performed by the user on the coordinate file, so that a requirement of the user for quickly viewing the coordinate file can be met, and coordinate file viewing efficiency of the user is improved. The viewing operation includes but is not limited to: single-tapping, double-tapping, triple-tapping, long-time pressing, short-time pressing, light touching, pressing by using a preset pressure value, sliding in a preset direction, sliding by using a preset pattern, a preset floating operation, a preset voice, or the like. The opening operation includes but is not limited to: single-tapping, double-tapping, triple-tapping, long-time pressing, short-time pressing, light touching, pressing by using a preset pressure value, sliding in a preset direction, sliding by using a preset pattern, a preset floating operation, a preset voice, or the like. Pressing duration of the long-time pressing is longer than pressing duration of the short-time pressing. For example, the pressing duration of the short-time pressing may be one second, and the pressing duration of the long-time pressing may be two seconds, three seconds, five seconds, or the like. The light touching may be 1 Newton pressing, or the like. The preset pressure value may be 2 Newton, 3 Newton, 5 Newton, or the like. The preset direction includes but is not limited to: a preset up direction, a preset down direction, a preset left direction, a preset right direction, or the like. The preset pattern includes but is not limited to: a triangle, a circle, a zigzag, or the like. The preset floating operation includes but is not limited to a preset mid-air gesture such as fist-clenching, hand-swinging, or thumb-up. For example, the preset voice may be "open", "view", or the like. In addition, the viewing operation needs to be different from the opening operation. For example, the viewing operation is a single-tapping operation, and the opening operation is a sliding operation along the preset right direction.

Optionally, the first multimedia file set is a folder, and an icon of the folder is an icon corresponding to the coordinate file. The user may learn, by using the coordinate file, whether a multimedia file for which the user wants to search is related to the coordinate file, and then find the required multimedia file by viewing the another multimedia file under the coordinate file. This helps the user quickly find the required multimedia file by using the coordinate file as a search clue.

It should be noted that, if there are multiple coordinate files in the first multimedia file set, any one of the multiple coordinate files may be selected to be displayed at the top of the screen of the electronic device, or a coordinate file is selected from the multiple coordinate files according to a preset selection rule, and the selected coordinate file is displayed at the top of the screen of the electronic device. The preset selection rule includes but is not limited to: an earliest generation time, a middlemost generation time, a latest generation time, random selection, or the like.

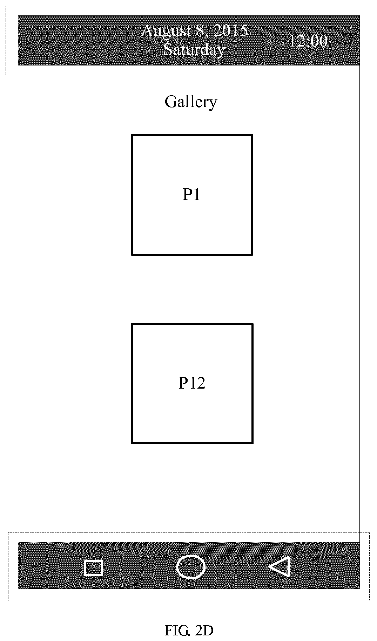

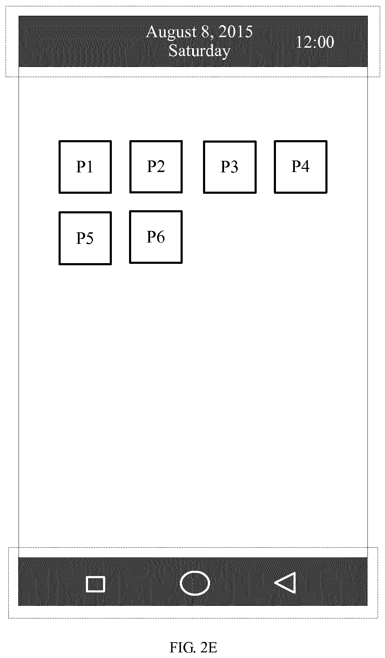

For example, referring to FIG. 2D, FIG. 2D is a schematic screen diagram of another gallery according to an embodiment of the present invention. In FIG. 2D, a photograph P1 is a coordinate photograph (that is, a coordinate file) of a photograph set, and a photograph P12 is a coordinate photograph of another photograph set. Other photographs P2, P3, P4, P5, and P6 belonging to a same photograph set as that of the coordinate photograph P1 are hidden under the coordinate photograph P1. Other photographs P7, P8, P9, P10, P11, P13, P14, P15, P16, P17, and P18 belonging to a same photograph set as that of the coordinate photograph P12 are hidden under the coordinate photograph P12. When receiving a single-tapping operation performed by the user on the coordinate photograph P1, the electronic device displays (for example, maximizes) the coordinate photograph P1 on a screen. When receiving a sliding operation along a preset right direction that is performed by the user on the coordinate photograph P1, the electronic device displays, in a thumbnail manner, the other photographs hidden under the coordinate photograph P1. Specifically, referring to FIG. 2E, FIG. 2E is a schematic screen diagram of another gallery according to an embodiment of the present invention. In FIG. 2E, other photographs P2, P3, P4, P5, and P6 under a coordinate photograph P1 are displayed on a screen of the electronic device. In this embodiment of the present invention, when the electronic device receives an opening operation on the coordinate photograph P1, the coordinate photograph P1 is displayed on the screen at the same time. In another executable embodiment, when receiving an opening operation on the coordinate photograph P1, the electronic device may display only the other photographs belonging to a same photograph set as that of the coordinate photograph P1, and no longer display the coordinate photograph P1. When all the photographs hidden under the coordinate photograph P1 are displayed on the screen, a sequence for sorting the photographs is not limited.

Optionally, when the coordinate photograph is displayed in a display manner in FIG. 2D, information such as a quantity of photographs hidden under the coordinate photograph, a photograph name, and a classification rule may be further displayed in a display area of the coordinate photograph, so that the user learns of a feature and the like of this group of photographs.

It can be learned that, in the method described in FIG. 2A, the electronic device classifies, according to the preset rule, the multiple multimedia files stored in the electronic device, to obtain each multimedia file set. In the first multimedia file set, the electronic device selects the multimedia file with the largest quantity of times of the historical user operation as the coordinate file of the first multimedia file set, and performs special marking on the selected coordinate file to differentially display the coordinate file and the another multimedia file in the first multimedia file set. When searching for a multimedia file in massive multimedia files, the user may quickly find the required multimedia file by using the coordinate file as a search clue, thereby improving multimedia file search efficiency, and bringing convenience to the user.

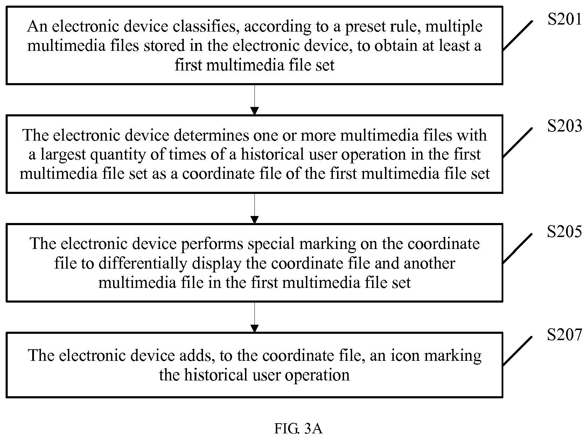

Optionally, referring to FIG. 3A, FIG. 3A is a schematic flowchart of another multimedia file management method according to an embodiment of the present invention. After performing special marking on the coordinate file to differentially display the coordinate file and the another multimedia file in the first multimedia file set, the electronic device may further add an icon mark to the coordinate file by performing step S207. Step S207 is described in detail as follows:
S207. The electronic device adds, to the coordinate file, an icon marking the historical user operation.

Specifically, the electronic device may automatically add a mark to the coordinate file according to a generation time and geographical location information of the coordinate file, or a name, a quantity of times, a time, frequency, and the like of a historical operation performed by the user on the coordinate file. Alternatively, the user may manually add a label to the coordinate photograph, to enrich information about the coordinate file, and provide more clues for search by the user, thereby bringing convenience to the user. In an example of photographs, the electronic device may mark a coordinate photograph according to a shooting date, a shooting location, or the like of the coordinate photograph, so that the user can learn of detailed information such as the shooting date and the shooting location of the coordinate photograph by viewing an icon. Alternatively, if a schedule or a memo is created on the shooting date corresponding to the coordinate photograph, the coordinate photograph may be marked according to the created schedule or the created memo. Alternatively, if the coordinate photograph is shared to WeChat Moments, the coordinate photograph may be marked according to this sharing record. A display manner of the icon may be: displaying the icon on the coordinate photograph, for example, adding a graphic mark to the coordinate photograph in a corner mark form. Specific content (for example, a shooting date, a shooting location, a shooting parameter, and a sharing record) of the icon is displayed if the user moves a finger or a cursor to the graphic mark. Alternatively, a display manner of the icon may be that the icon is not displayed on the coordinate file, but if a cursor or a finger stays on the coordinate photograph for more than a preset period of time, a small window is popped up to display specific content of the icon. The preset period of time may be one second, two seconds, five seconds, or the like. Alternatively, a display manner of the icon may be that the icon is hidden under the coordinate photograph, and when receiving a preset operation performed by the user on the coordinate photograph, the electronic device displays the icon in an area of a current screen in a pop-up window manner, or switches a current screen to another screen to display the icon. When an operation such as tapping performed by the user on an icon is received, specific content of the icon is displayed. The preset operation includes but is not limited to: a stretch gesture operation, a pinch gesture operation, or the like, and the preset operation is different from the viewing operation and the opening operation.

It should be noted that, the electronic device may not only mark the coordinate file, but also may mark another non-coordinate file, so as to help the user learn of detailed information about each multimedia file more accurately, and quickly find a multimedia file required by the user.

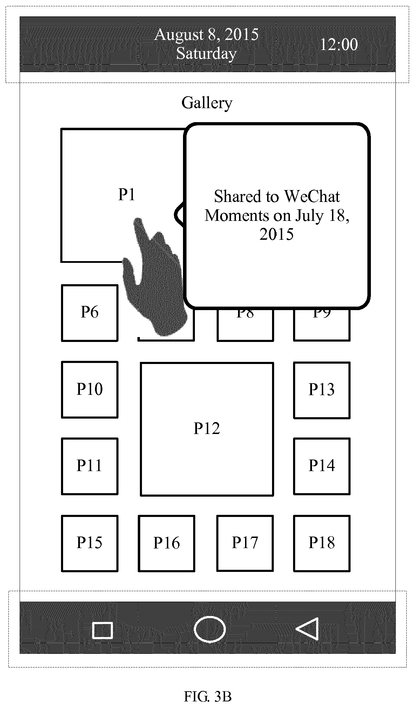

For example, referring to FIG. 3B, FIG. 3B is a schematic screen diagram of another gallery according to an embodiment of the present invention. In FIG. 3B, when the electronic device detects that a period of time of touching a coordinate photograph P1 by the user's finger exceeds a preset period of two seconds, the electronic device pops up a window on a current screen to display an icon corresponding to the coordinate photograph P1. Specific content of the icon is "Shared to WeChat Moments on July 18, 2015". When the user flicks in the gallery to browse through photographs, an icon content annotation of the coordinate photograph can be conveniently viewed in this manner, so as to help the user quickly find a required photograph. In addition, a display time period of the icon content annotation may be preset, for example, the icon content annotation is displayed for two seconds, five seconds, or the like.

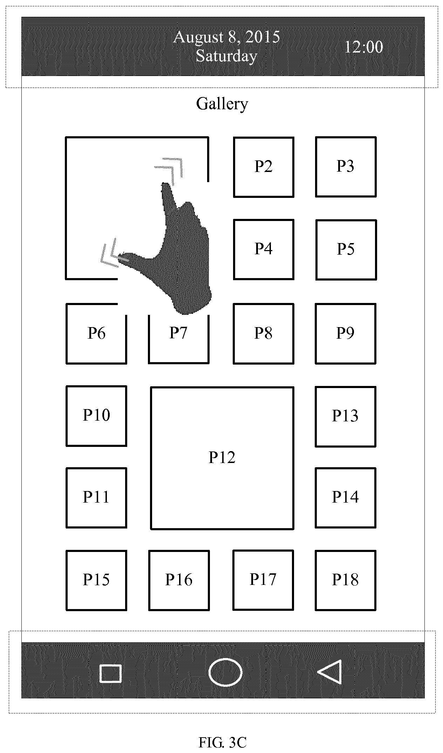

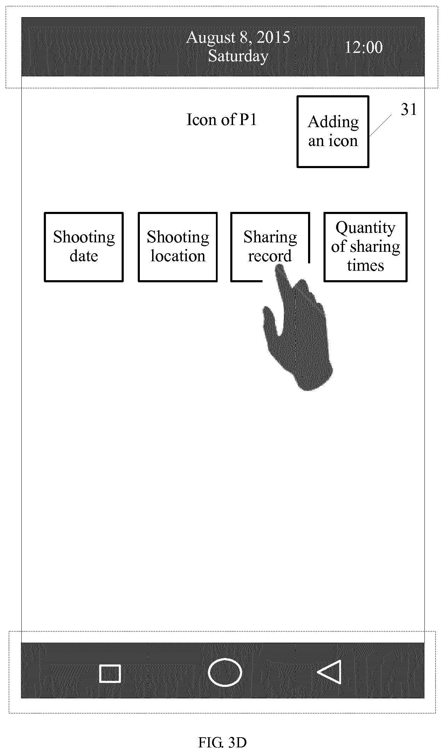

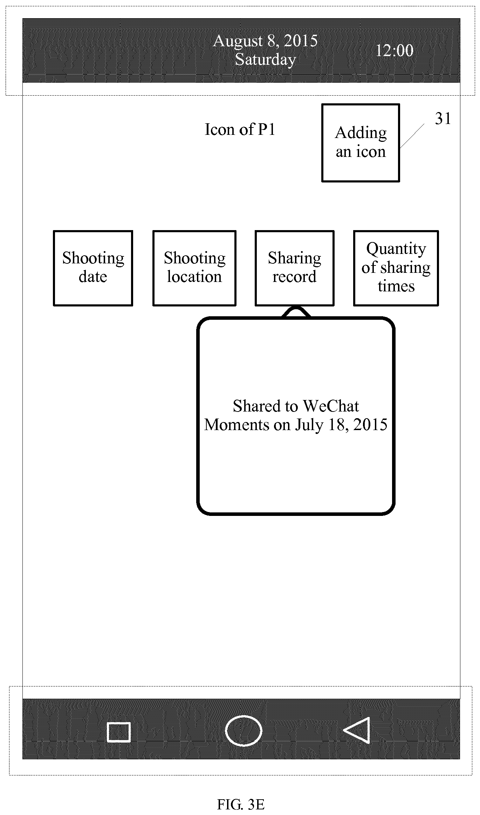

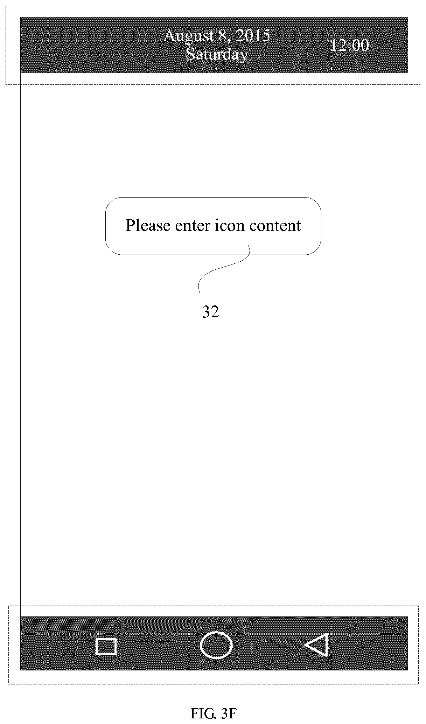

Alternatively, referring to FIG. 3C, FIG. 3C is a schematic screen diagram of another gallery according to an embodiment of the present invention. In FIG. 3C, if the user enters a stretch gesture operation in an area in which a coordinate photograph P1 is located, the electronic device converts the stretch gesture into an instruction of viewing an icon, and then displays an icon corresponding to the coordinate photograph P1 on a screen according to the instruction. Referring to FIG. 3D, four icons, including a shooting date, a shooting location, a sharing record, and a quantity of sharing times, corresponding to the coordinate photograph P1 are displayed on the screen. When the user taps the icon "sharing record" on the screen shown in FIG. 3D, referring to FIG. 3E, a window is popped up on the screen to display specific content corresponding to the icon "sharing record", that is, "Shared to WeChat Moments on July 18, 2015". Therefore, the user can view an icon content annotation of the coordinate file. A button 31 for adding an icon is further displayed on the screen shown in FIG. 3D. When the user taps the button 31 for adding an icon, the user may add a new icon to the coordinate photograph P1. Referring to FIG. 3F, a label 32 is displayed on the screen. The user may enter text information and the like into the label 32, to add a new icon to the coordinate photograph P1, thereby helping the user view information about the coordinate file subsequently, and bringing convenience to the user. It should be noted that, FIG. 3E and FIG. 3F show merely optional display screens. In another implementation, there may be other display content on the screen and another display manner. This is not limited herein.

It can be learned that, by performing step S207, the electronic device may automatically add an icon to the coordinate file, to enrich information about the coordinate file, and provide more clues for search by the user. This helps the user find the required multimedia file more quickly, and brings convenience to the user.

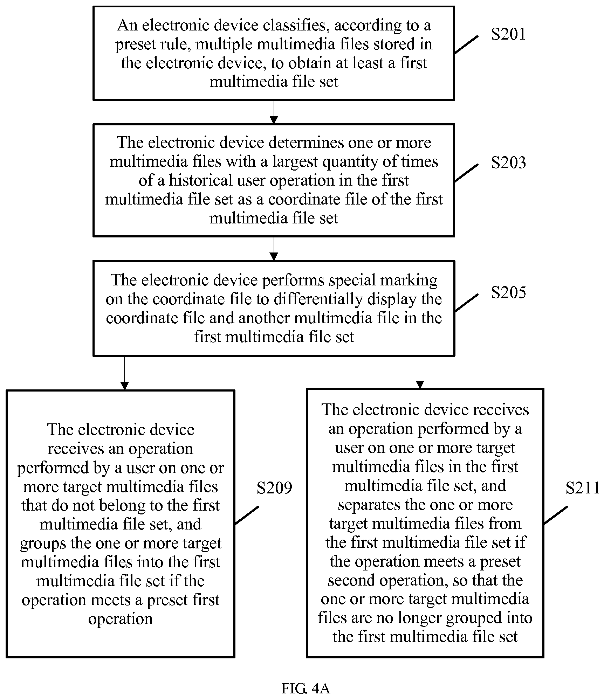

Optionally, referring to FIG. 4A, FIG. 4A is a schematic flowchart of another multimedia file management method according to an embodiment of the present invention. After performing special marking on the coordinate file to differentially display the coordinate file and the another multimedia file in the first multimedia file set, the electronic device may further perform step S209 or step S211 to implement manual adjustment performed by the user on a classification result. Step S209 and step S211 are described in detail as follows:

S209. The electronic device receives an operation performed by a user on one or more target multimedia files that do not belong to the first multimedia file set, and groups the one or more target multimedia files into the first multimedia file set if the operation meets a preset first operation.

S211. The electronic device receives an operation performed by a user on one or more target multimedia files in the first multimedia file set, and separates the one or more target multimedia files from the first multimedia file set if the operation meets a preset second operation, so that the one or more target multimedia files are no longer grouped into the first multimedia file set.

Specifically, after the electronic device automatically classifies the multiple multimedia files, the user may further manually adjust a classification result to classify, into the first multimedia file set by means of dragging or another operation, the target multimedia file that does not belong to the first multimedia file set, or separate, from the first multimedia file set by means of dragging or another operation, the target multimedia file that is grouped into the first multimedia file set, so that the target multimedia file is no longer grouped into the first multimedia file set. The first operation includes but is not limited to: an operation of dragging, to the coordinate file of the first multimedia file set, the one or more target multimedia files that do not belong to the first multimedia file set, or an operation of dragging, to any multimedia file in the first multimedia file set, the one or more target multimedia files that do not belong to the first multimedia file set. The second operation includes but is not limited to: an operation of dragging, to a coordinate file of another multimedia file set, the one or more target multimedia files that belong to the first multimedia file set, an operation of dragging, to any multimedia file in another multimedia file set, the one or more target multimedia files that belong to the first multimedia file set, or an operation of dragging, to any multimedia file that does not belong to the first multimedia file set, the one or more target multimedia files that belong to the first multimedia file set. This helps the user adjust a classification display result, so that a defect of intelligent classification of the electronic device is remedied, and a personalized requirement of the user is met.

Optionally, when receiving the first operation performed by the user on the one or more target multimedia files that do not belong to the first multimedia file set, the electronic device may hide the one or more target multimedia files under the coordinate file, or may adjust display locations of the one or more multimedia files to a display area corresponding to the first multimedia file set, so as to group the one or more target multimedia files into the first multimedia file set. When receiving the second operation performed by the user on the one or more target multimedia files that belong to the first multimedia file set, the electronic device may adjust display locations of the one or more target multimedia files to a display area corresponding to another multimedia file set, or hide the one or more target multimedia files under a coordinate file corresponding to another multimedia file set, or adjust display locations of the one or more target multimedia files to another area other than an area corresponding to the first multimedia file set, so as to separate the one or more target multimedia files from the first multimedia file set.

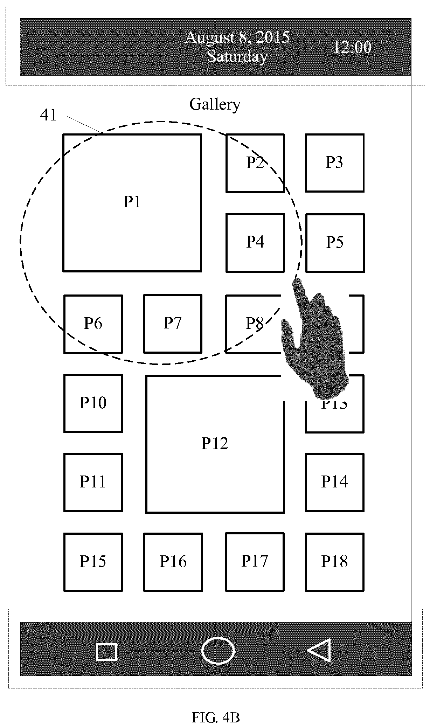

Optionally, the user may adjust a result of automatic classification by the electronic device in a manner such as delimiting an area by using a finger joint, to classify multiple multimedia files in the area into a multimedia file set. Referring to FIG. 4B, in FIG. 4B, the user delimits an area 41 on a screen by using a finger, and the area 41 includes photographs P1, P2, P4, P6, P7, and P8. The electronic device automatically classifies the photographs P1, P2, P4, P6, P7, and P8 in the area 41 into a multimedia file set, so that the photographs P7 and P8 no longer belong to a photograph set to which a coordinate photograph P12 belongs. In addition, photographs P3 and P5 that are not included in the area 41 may still belong to a photograph set to which the coordinate photograph P1 belongs, or may be separated from a photograph set to which the coordinate photograph P1 belongs. This is not specifically limited in this embodiment of the present invention.

Optionally, after steps S201 to S205 are performed, only step S209 may be performed, or only step S211 may be performed, or both step S209 and step S211 may be performed. In addition, a sequence of performing step S209 and step S211 is not limited.

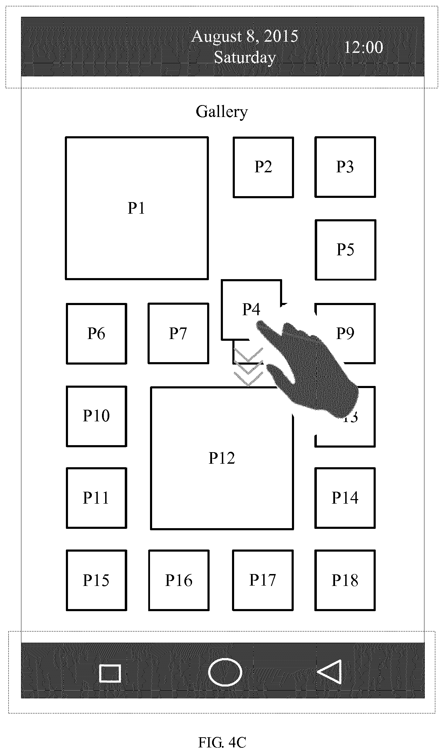

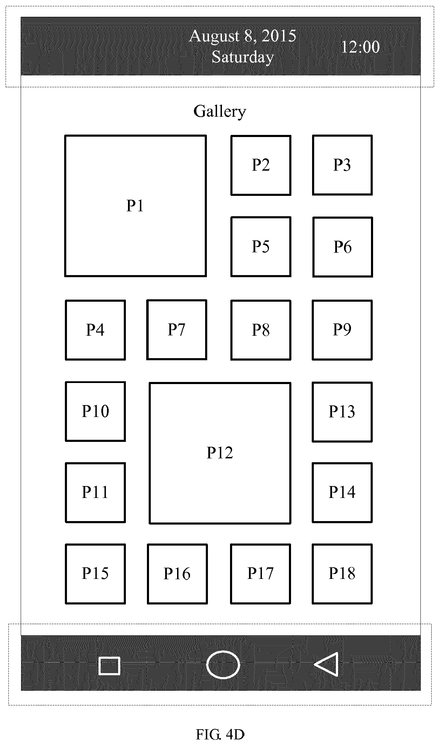

For example, referring to FIG. 4C, FIG. 4C is a schematic screen diagram of another gallery according to an embodiment of the present invention. In FIG. 4C, a photograph P12 displayed on a screen is a coordinate photograph (that is, a coordinate file) of a photograph set. A photograph P4 and the coordinate photograph P12 do not belong to a same photograph set. The user taps to select the photograph P4, and drags P4 to an area in which the coordinate photograph P12 is located. The electronic device adjusts the photograph P4 to a display area of a multimedia file set corresponding to the photograph P12, so that the photograph P4 is separated from a photograph set 1, and is grouped into a photograph set 2. In this way, a classification result is adjusted, thereby bringing convenience to the user. For an adjusted display effect, refer to FIG. 4D. In FIG. 4D, a display location of the photograph P4 is moved to the display area of the photograph set to which the coordinate photograph P12 belongs, and display locations of photographs P5 and P6 are moved forward. Optionally, the photograph P4 may be moved to another location in the display area of the photograph set to which the coordinate photograph P12 belongs. This is not specifically limited in this embodiment of the present invention.

It can be learned that, after the electronic device classifies the multiple multimedia files by performing step S209 and step S211, the user may further manually adjust a classification result, so that a defect of intelligent classification of the electronic device is remedied, and a personalized requirement of the user is met.

Optionally, after steps S201 to S205 are performed, step S207 may be performed, and then step S209 and/or step S211 are/is performed, or step S207 is performed after step S209 and/or step S211 are/is performed. A sequence of performing step S209 and step S211 is not limited. For a detailed description of each step, refer to the foregoing description of the same step. Details are not described herein again.

To facilitate better implementation of the foregoing solution in the embodiment of the present invention, the present invention further provides an electronic device for implementing the foregoing solution.

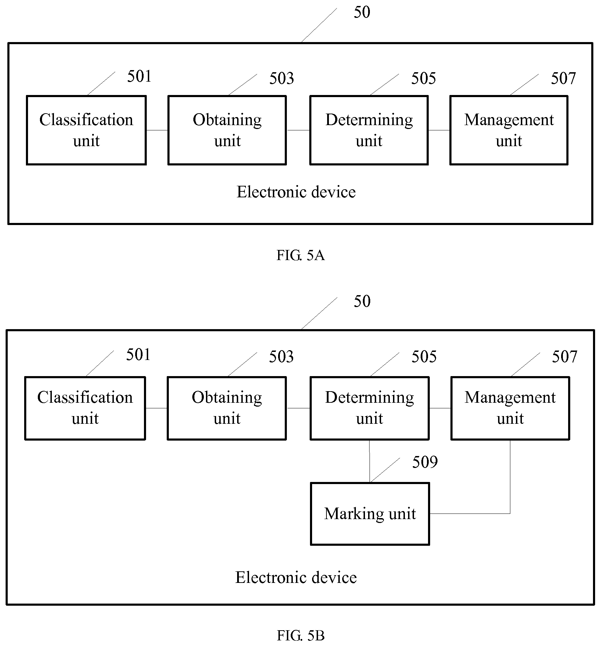

Referring to FIG. 5A, FIG. 5A is a schematic structural diagram of an electronic device according to an embodiment of the present invention. An electronic device 50 shown in FIG. 5A may include a classification unit 501, an obtaining unit 503, a determining unit 505, and a management unit 507. The electronic device 50 may be configured to perform the method described in all the foregoing content. For content that is not described in the embodiment shown in FIG. 5A, refer to related description in the foregoing method embodiment.

The classification unit 501 is configured to classify, according to a preset rule, multiple multimedia files stored in the electronic device.

The obtaining unit 503 is configured to obtain at least a first multimedia file set according to a result of the classification by the classification unit 501, where the first multimedia file set includes icons that are respectively corresponding to multiple multimedia files meeting the preset rule.

The determining unit 505 is configured to determine one or more multimedia files with a largest quantity of times of a historical user operation in the first multimedia file set as a coordinate file of the first multimedia file set.

The management unit 507 is configured to perform special marking on the coordinate file to differentially display the coordinate file and another multimedia file in the first multimedia file set.

Referring to FIG. 5B, FIG. 5B is a schematic structural diagram of another electronic device according to an embodiment of the present invention. An electronic device 50 shown in FIG. 5B is obtained by optimizing the electronic device 50 shown in FIG. 5A. In comparison with that in FIG. 5A, the electronic device 50 shown in FIG. 5B may further include a marking unit 509.

The marking unit 509 is configured to: after the management unit 507 performs special marking on the coordinate file to differentially display the coordinate file and the another multimedia file in the first multimedia file set, add, to the coordinate file, an icon marking the historical user operation.

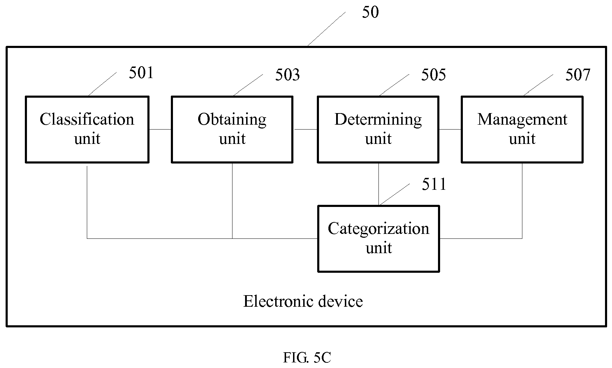

Referring to FIG. 5C, FIG. 5C is a schematic structural diagram of another electronic device according to an embodiment of the present invention. An electronic device 50 shown in FIG. 5C is obtained by optimizing the electronic device 50 shown in FIG. 5A. In comparison with that in FIG. 5A, the electronic device 50 shown in FIG. 5C may further include a categorization unit 511.

The categorization unit 511 is configured to: after the management unit 507 performs special marking on the coordinate file to differentially display the coordinate file and the another multimedia file in the first multimedia file set, receive an operation performed by a user on one or more target multimedia files that do not belong to the first multimedia file set, and group the one or more target multimedia files into the first multimedia file set if the operation meets a preset first operation; or
after the management unit 507 performs special marking on the coordinate file to differentially display the coordinate file and the another multimedia file in the first multimedia file set, receive an operation performed by a user on one or more target multimedia files in the first multimedia file set, and separate the one or more target multimedia files from the first multimedia file set if the operation meets a preset second operation, so that the one or more target multimedia files are no longer grouped into the first multimedia file set.

Optionally, the electronic device 50 may further include the classification unit 501, the obtaining unit 503, the determining unit 505, the management unit 507, the marking unit 509, and the categorization unit 511. For specific implementation of each unit, refer to description of the same unit in the foregoing solution.

It should be noted that, a function of each function unit in the electronic device 50 described in this embodiment of the present invention may be specifically implemented according to the method in the foregoing method embodiment, and details are not described herein again.

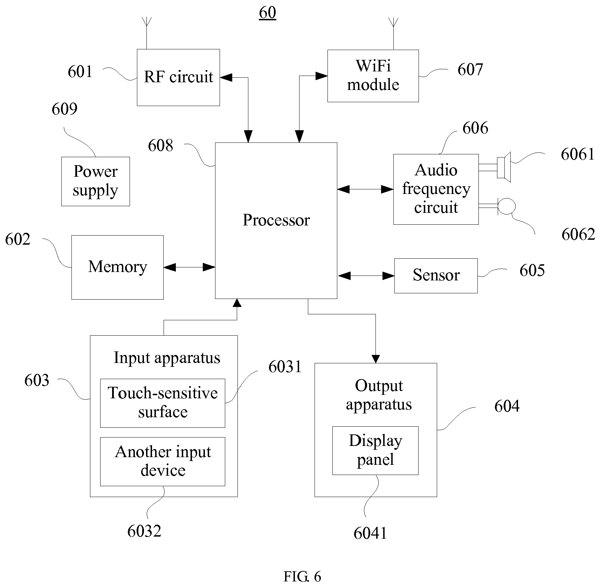

Referring to FIG. 6, FIG. 6 is a schematic structural diagram of an electronic device according to an embodiment of the present invention. An electronic device 60 shown in FIG. 6 includes components such as an RF (Radio Frequency, radio frequency) circuit 601, a memory 602 that stores one or more computer programs, an input apparatus 603, an output apparatus 604, a sensor 605, an audio frequency circuit 606, a Wi-Fi (Wireless Fidelity) module 607, a processor 608 with one or more processing cores, and a power supply 609. A person skilled in the art may understand that a structure of the electronic device shown in FIG. 6 constitutes no limitation on the electronic device, and the electronic device may include components more or fewer than those shown in the diagram, or a combination of some components, or different component arrangements.

The RF circuit 601 may be configured to: receive and send information, or receive and send a signal during a call. Particularly, after receiving downlink information of a base station, the RF circuit 601 sends the downlink information to one or more processors 608 for processing, and sends related uplink data to the base station. Generally, the RF circuit 601 includes but is not limited to an antenna, at least one amplifier, a tuner, one or more oscillators, a subscriber identity module (SIM) card, a transceiver, a coupler, an LNA (Low Noise Amplifier, low noise amplifier), a duplexer, and the like. In addition, the RF circuit 601 may further communicate with a network and another terminal device by means of wireless communication. Any communications standard or protocol may be used for the wireless communication, including but not limited to GSM (Global System for Mobile communication, Global System for Mobile Communications), GPRS (General Packet Radio Service, general packet radio service), CDMA (Code Division Multiple Access, Code Division Multiple Access), WCDMA (Wideband Code Division Multiple Access, Wideband Code Division Multiple Access), LTE (Long Term Evolution, Long Term Evolution), an email, an SMS (Short Messaging Service, short message service), or the like.

The memory 602 may be configured to store a computer program and a module, and the processor 608 executes various function applications and performs data processing by running the computer program and the module stored in the memory 602. The memory 602 may mainly include a program storage area and a data storage area. The program storage area may store an operating system, an application program required by at least one function (such as a sound play function or an image play function), and the like. The data storage area may store data (such as a photograph, audio data, or video data) that is created according to use of the electronic device 60, and the like. In addition, the memory 602 may include a high-speed random access memory, and may further include a nonvolatile memory, for example, at least one magnetic disk memory component, a flash memory component, or another volatile solid-state memory component. Correspondingly, the memory 602 may further include a memory controller, so as to provide the processor 608 and the input apparatus 603 with access to the memory 602.

The input apparatus 603 may be configured to: receive entered numeral or character information, and generate signal input that is related to a user setting and function control and that is of a keyboard, a mouse, an operating lever, an optical device, or a trackball. Specifically, the input apparatus 603 may include a touch-sensitive surface 6031 and another input device 6032. The touch-sensitive surface 6031, also referred to as a touch display panel or a touchpad, may collect a touch operation (such as an operation performed by a user on the touch-sensitive surface 6031 or near the touch-sensitive surface 6031 by using any appropriate object or accessory such as a finger or a stylus) performed by a user on or near the touch-sensitive surface, and drive a corresponding connection apparatus according to a preset program. Optionally, the touch-sensitive surface 6031 may include two parts: a touch detection apparatus and a touch controller. The touch detection apparatus detects a touch location of the user, detects a signal brought by the touch operation, and transmits the signal to the touch controller. The touch controller receives touch information from the touch detection apparatus, converts the touch information into contact coordinates, and sends the contact coordinates to the processor 608; and can receive and execute a command sent by the processor 608. In addition, the touch-sensitive surface 6031 may be, for example, a resistive, capacitive, infrared, or surface acoustic touch-sensitive surface. In addition to the touch-sensitive surface 6031, the input apparatus 603 may further include the another input device 6032. Specifically, the another input device 6032 may include but is not limited to one or more of a physical keyboard, a function key (such as a volume control key or an on/off key), a trackball, a mouse, an operating lever, or the like.

The output apparatus 604 may be configured to display information entered by the user or information provided for the user, and various graphical user interfaces of the electronic device 60. These graphical user interfaces may include a graph, a text, an icon, a video, and any combination thereof. The output apparatus 604 may include a display panel 6041. Optionally, the display panel 6041 may be configured by using an LCD (Liquid Crystal Display, liquid crystal display), an OLED (Organic Light-Emitting Diode, organic light-emitting diode), or the like. Further, the touch-sensitive surface 6031 may cover the display panel 6041. When detecting the touch operation on or near the touch-sensitive surface 6031, the touch-sensitive surface 6031 transmits the touch operation to the processor 608 to determine a type of a touch event, and then the processor 608 provides corresponding visual output on the display panel 6041 according to the type of the touch event. Although the touch-sensitive surface 6031 and the display panel 6041 are used as two independent components to implement input and output functions in FIG. 6, in some embodiments, the touch-sensitive surface 6031 may be integrated with the display panel 6041 to implement the input and output functions.

The electronic device 60 may further include at least one sensor 605 such as a light sensor, a motion sensor, and another sensor. Specifically, the light sensor may include an ambient light sensor and a proximity sensor. The ambient light sensor may adjust luminance of the display panel 6041 according to brightness of ambient light. The proximity sensor may turn off the display panel 6041 and/or backlight when the electronic device 60 moves to an ear. As a type of motion sensor, a gravity acceleration sensor may detect acceleration values in all directions (generally, three axes), may detect a value and a direction of gravity in a static mode, and may be applied to an application for identifying a posture (such as screen switching between a landscape mode and a portrait mode, a relevant game, and magnetometer posture calibration) of the electronic device 60, a function related to vibration identification (such as a pedometer or a stroke), and the like. Other sensors such as a gyroscope, a barometer, a hygrometer, a thermometer, and an infrared sensor may be further configured in the electronic device 60, and details are not described herein.

The audio frequency circuit 606, a loudspeaker 6061, and a microphone 6062 may provide an audio interface between the user and the electronic device 60. The audio frequency circuit 606 may convert received audio data into an electrical signal, and transmit the electrical signal to the loudspeaker 6061, and the loudspeaker 6061 converts the electrical signal into a sound signal for output. In addition, the microphone 6062 converts a collected sound signal into an electrical signal, and the audio frequency circuit 606 receives the electrical signal, converts the electrical signal into audio data, and outputs the audio data to the processor 608 for processing, so as to send the audio data to, for example, another electronic device by using the RF circuit 601, or output the audio data to the memory 602 for further processing. The audio frequency circuit 606 may further include a headset socket, so as to provide communication between a peripheral headset and the electronic device 60.

WiFi belongs to a short-range wireless transmission technology. The electronic device 60 may help, by using the WiFi module 607, the user receive and send emails, browse through a web page, access streaming media, and the like. The WiFi module 607 provides the user with wireless broadband Internet access. Although FIG. 6 shows the WiFi module 607, it can be understood that the WiFi module 607 is not a mandatory part of the electronic device 60, and may be omitted according to a requirement without changing essence of the present invention.

The processor 608 is a control center of the electronic device 60, connects all parts of the entire electronic device 60 by using various interfaces and cables, and executes various functions of the electronic device 60 and performs data processing by running or executing the computer programs and/or the module stored in the memory 602, and invoking data stored in the memory 602, so as to perform overall monitoring on the electronic device 60. Optionally, the processor 608 may include the one or more processing cores. Preferably, the processor 608 may integrate an application processor and a modem processor. The application processor mainly processes an operating system, a user interface, an application program, and the like, and the modem processor mainly processes wireless communication. It can be understood that the modem processor may not be integrated into the processor 608.

The electronic device 60 further includes the power supply 609 (such as a battery) that supplies power to each component. Preferably, the power supply may be logically connected to the processor 608 by using a power supply management system, so as to implement functions such as charging management, discharging management, and power consumption management by using the power supply management system. The power supply 609 may further include any component such as one or more direct current or alternating current power supplies, a rechargeable system, a power supply failure detection circuit, a power supply converter or an inverter, and a power supply status indicator.

Although not shown in the diagram, the electronic device 60 may further include a camera lens, a Bluetooth module, and the like, and details are not described herein. Specifically, in this embodiment of the present invention, the output apparatus 604 (or the input apparatus 603) of the electronic device is a touchscreen display. The electronic device further includes the memory 602, the processor 608, and the one or more computer programs. The one or more computer programs are stored in the memory 602, and the processor 608 is configured to invoke a multimedia file management program stored in the memory 602 (a nonvolatile memory), so as to perform the following steps:

The processor 608 classifies, according to a preset rule, multiple multimedia files stored in the electronic device, to obtain at least a first multimedia file set, where the first multimedia file set includes icons that are respectively corresponding to multiple multimedia files meeting the preset rule.

The processor 608 determines one or more multimedia files with a largest quantity of times of a historical user operation in the first multimedia file set as a coordinate file of the first multimedia file set.

The processor 608 performs special marking on the coordinate file to differentially display the coordinate file and another multimedia file in the first multimedia file set by using the output apparatus 604.

Optionally, that the processor 608 classifies, according to a preset rule, multiple multimedia files stored in the electronic device includes at least one of the following operations:
the processor 608 groups, into a multimedia file set according to generation time of the multimedia files, multiple multimedia files that are stored in the electronic device, that are generated on a same date of a same month in a same year, and whose generation quantity in a first preset time period meets a preset condition;
the processor 608 groups, into a multimedia file set according to information about geographical locations at which the multimedia files are generated, multiple multimedia files that are stored in the electronic device and that have same geographical location information;
the processor 608 groups, into a multimedia file set according to generation time of the multimedia files, multiple multimedia files that are stored in the electronic device and that are generated on a same date of a same month;
the processor 608 groups, into a multimedia file set according to generation time of the multimedia files, multiple multimedia files that are stored in the electronic device and whose generation time points are in a second preset time period;
the processor 608 groups, into a multimedia file set according to content of the multimedia files, multiple multimedia files that include one or more specified objects; or
the processor 608 groups, into a multimedia file set according to labels of the multimedia files, multiple multimedia files that are stored in the electronic device and that have a same label.

Optionally, after the processor 608 performs the foregoing step of performing special marking on the coordinate file to differentially display the coordinate file and the another multimedia file in the first multimedia file set, the processor 608 may further add, to the coordinate file, an icon marking the historical user operation.

Optionally, after the processor 608 performs the foregoing step of performing special marking on the coordinate file to differentially display the coordinate file and the another multimedia file in the first multimedia file set, the processor 608 may further receive, by using the input apparatus 603, an operation performed by a user on one or more target multimedia files that do not belong to the first multimedia file set, and group the one or more target multimedia files into the first multimedia file set if the operation meets a preset first operation; or
the processor 608 receives, by using the input apparatus 603, an operation performed by a user on one or more target multimedia files in the first multimedia file set, and separates the one or more target multimedia files from the first multimedia file set if the operation meets a preset second operation, so that the one or more target multimedia files are no longer grouped into the first multimedia file set.

Optionally, that the processor 608 determines a multimedia file with a largest quantity of times of a historical user operation in the first multimedia file set as a coordinate file of the target classification file is specifically:
if there are multiple multimedia files with the largest quantity of times of the historical user operation in the first multimedia file set, determining, by the processor 608, a middlemost multimedia file as the coordinate file of the first multimedia file set according to generation time of the multimedia files.

Optionally, the special marking is specifically at least one of display by means of enlargement, display by adding a frame, display by adding a mark, display by using a special color, display by using a special pattern, or dynamic display.

Optionally, that the processor 608 performs special marking on the coordinate file to differentially display the coordinate file and another multimedia file in the first multimedia file set is specifically:
hiding, by the processor 608 under the coordinate file, the another multimedia file in the first multimedia file set other than the coordinate file, to differentially display the coordinate file and the another multimedia file in the first multimedia file set.

Optionally, the historical user operation is specifically at least one of viewing, editing, sharing, marking, or using.

It should be noted that, a function of each function module in the electronic device 60 described in this embodiment of the present invention may be specifically implemented according to the method in the foregoing method embodiment, and details are not described herein again.

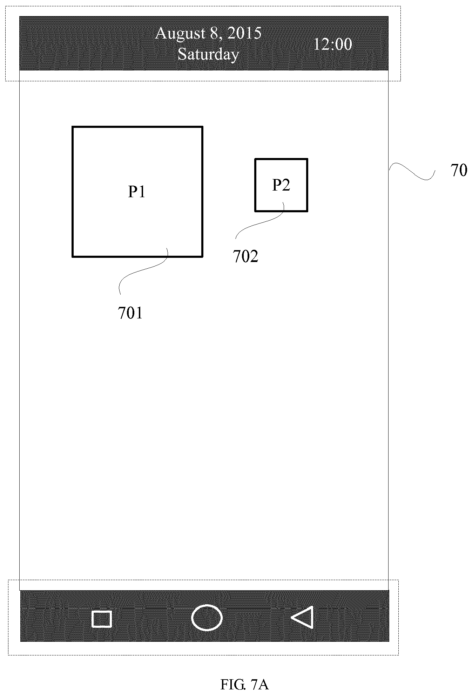

To facilitate better implementation of the foregoing solution in the embodiment of the present invention, an embodiment of the present invention further provides a graphical user interface on an electronic device. The electronic device includes a display, one or more user input device, a memory, and one or more processors for executing one or more computer programs stored in the memory. In this embodiment of the present invention, the display may be a touchscreen display, the touchscreen display includes a touch-sensitive surface and a display panel, the touch-sensitive surface is configured to receive an operation of a user, and the display panel is configured to display content such as an icon. The graphical user interface includes at least a first multimedia file icon indicating a first multimedia file (not a folder) and a second multimedia file icon indicating a second multimedia file or a folder (the folder may include one or more multimedia files). The following describes the graphical user interface in detail with reference to schematic diagrams of the graphical user interface in FIG. 7A to 7F. Referring to FIG. 7A, FIG. 7A is a schematic diagram of a graphical user interface according to an embodiment of the present invention. In FIG. 7A, a graphical user interface 70 includes a first multimedia file icon 701 and a second multimedia file icon 702. A multimedia file includes but is not limited to a photograph, a picture, audio, a video, a document, and the like. The multimedia file icon includes but is not limited to a thumbnail corresponding to the photograph, a thumbnail corresponding to the picture, an icon corresponding to the audio file, a picture corresponding to the video file, an icon corresponding to the document, an icon corresponding to a folder, and the like.

The first multimedia file icon 701 is displayed on the display in a first display manner, the second multimedia file icon 702 is displayed on the display in a second display manner, and the first display manner is different from the second display manner.

A combination operation performed by a user for combining the second multimedia file icon 702 with the first multimedia file icon 701 is detected.

In response to the detected combination operation, the first multimedia file icon 701 is still displayed on the display in the first display manner, but displaying the second multimedia file icon 702 is stopped.

Specifically, on the graphical user interface 70, touch information (including touch point coordinates, touch force, a touch time, a touch direction, and the like) of a touch operation (including but not limited to a pressing operation, a sliding operation, or the like) entered by the user on or near the graphical user interface may be detected.

Optionally, the first display manner is specifically at least one of display by means of enlargement, display by adding a frame, display by adding a mark, display by using a special color, display by using a special pattern, or dynamic display. That the first multimedia file icon 701 is displayed by means of enlargement is used as an example in FIG. 7A.

Optionally, the combination operation of combining the second multimedia file icon with the first multimedia file icon is specifically: dragging the second multimedia file icon to the first multimedia file icon.

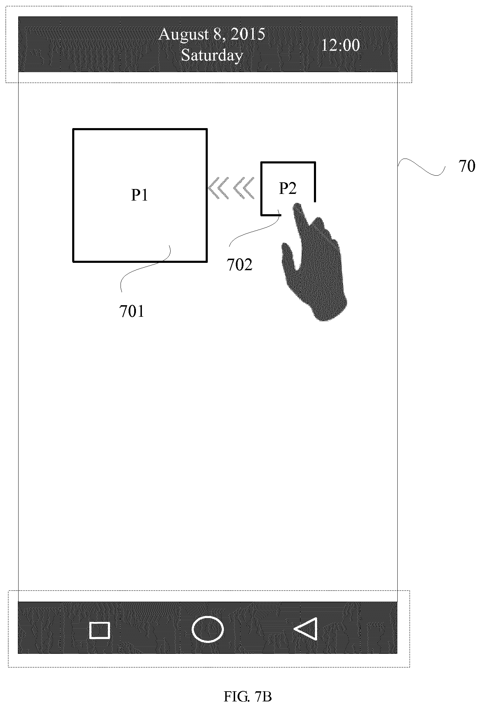

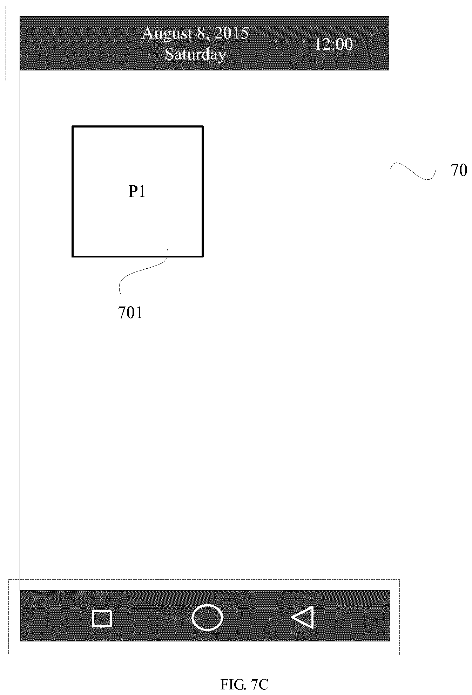

For example, referring to FIG. 7B, FIG. 7B is a schematic diagram of another graphical user interface according to an embodiment of the present invention. In FIG. 7B, the graphical user interface 70 detects the operation of dragging the second multimedia file icon 702 to the first multimedia file icon 701 by the user. Referring to FIG. 7C, FIG. 7C is a schematic screen diagram obtained after the second multimedia file icon 702 is combined with the first multimedia file icon 701. In FIG. 7C, the second multimedia file icon 702 is hidden under the first multimedia file icon 701, the first multimedia file icon 701 is still displayed by means of enlargement, but the second multimedia file icon 702 is no longer displayed.

On the graphical user interface described in FIG. 7A, different multimedia files may be differentially displayed, so that the user views a required multimedia file accordingly, and can manage and classify a multimedia file icon conveniently and quickly. In this way, a display manner of the graphical user interface is optimized, and the graphical user interface is more concise.

Optionally, the graphical user interface may further include the following function: in response to a detected opening operation performed by the user on the first multimedia file icon 701, displaying the first multimedia file icon 701 on the display, and re-displaying the second multimedia file icon 702, so as to help the user view each grouped multimedia file. A display manner of the first multimedia file icon 701 may be the first display manner, or may be another display manner. A display manner of the second multimedia file icon 702 may be the second display manner, or may be another display manner. In addition, the display manner of the first multimedia file icon 701 may be the same as or different from the display manner of the second multimedia file icon 702. This is not specifically limited in this embodiment of the present invention.

Optionally, the opening operation on the first multimedia file icon is specifically at least one of a pressing operation, a sliding operation, or a floating operation that meets a preset condition, and the opening operation is different from the combination operation. The pressing operation includes but is not limited to single-tapping, double-tapping, triple-tapping, long-time pressing, short-time pressing, light touching, pressing by using a preset pressure value, or the like. Pressing duration of the long-time pressing is longer than pressing duration of the short-time pressing. For example, the pressing duration of the short-time pressing may be one second, and the pressing duration of the long-time pressing may be two seconds, three seconds, five seconds, or the like. The light touching may be 1 Newton pressing, or the like. The preset pressure value may be 2 Newton, 3 Newton, 5 Newton, or the like. The sliding operation includes but is not limited to: sliding in a preset direction, sliding by using a preset pattern, or the like. The preset direction includes but is not limited to: a preset up direction, a preset down direction, a preset left direction, a preset right direction, or the like. The preset pattern includes but is not limited to: a triangle, a circle, a zigzag, or the like. The floating operation includes but is not limited to a preset mid-air gesture such as fist-clenching, hand-swinging, or thumb-up.

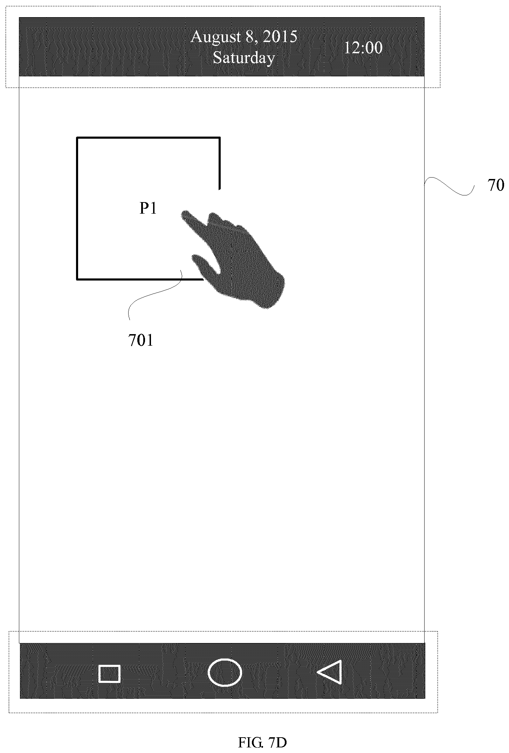

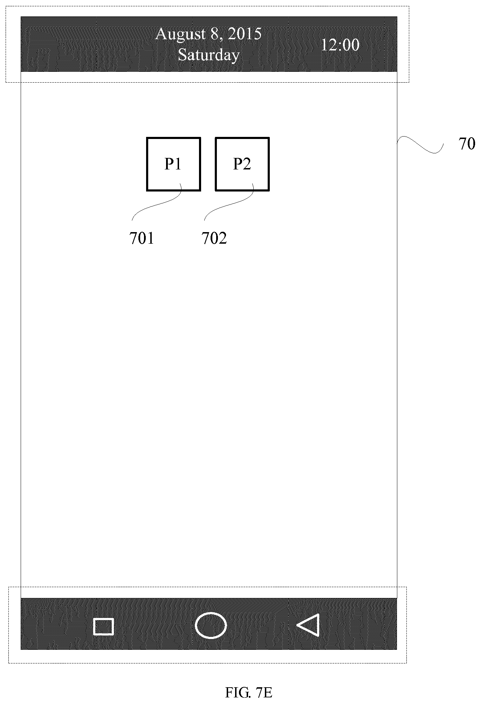

For example, referring to FIG. 7D, FIG. 7D is a schematic diagram of another graphical user interface according to an embodiment of the present invention. In FIG. 7D, if detecting a double-tapping operation performed by the user on the first multimedia file icon 701, the graphical user interface 70 re-displays the hidden second multimedia file icon 702, and continues displaying the first multimedia file icon 701. After double-tapping is performed on the first multimedia file icon 701, display manners of the first multimedia file icon 701 and the second multimedia file icon 702 may be shown in FIG. 7A, that is, the first multimedia file icon 701 is displayed by means of enlargement; or may be shown in FIG. 7E. In FIG. 7E, the first multimedia file icon 701 and the second multimedia file icon 702 are displayed on the graphical user interface 70 in a same manner.

Optionally, the graphical user interface further includes the following function: in response to a detected marking operation performed by the user on the first multimedia file icon 701, additionally displaying, on the display, an icon marking the historical user operation, so that the user learns of detailed information about the first multimedia file.

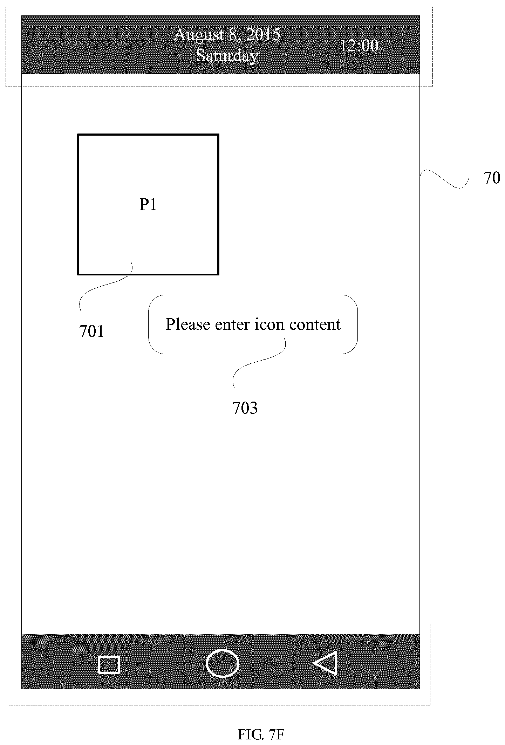

Specifically, the marking operation is different from the opening operation, and the marking operation includes but is not limited to: single-tapping, double-tapping, long-time pressing, short-time pressing, pressing by using a preset pressure value, or the like. For example, in FIG. 7D, if the graphical user interface detects a long-time pressing operation performed by the user on the first multimedia file icon 701, an icon is displayed on the graphical user interface 70, to help the user view an icon content annotation of the first multimedia file, or help the user add an icon to the first multimedia file. Referring to FIG. 7F, in FIG. 7F, a label 703 is displayed, and the user may enter text information and the like into the label, to add an icon to the first multimedia file, thereby helping the user view information about the first multimedia file subsequently, and bringing convenience to the user.

It should be noted that, a shape, a color, a displayed control component (a menu key, a Home key, a return key, or the like), displayed content (a date, a time, or the like), and the like in dashed line areas at the top and the bottom of screens in FIG. 2C to 2E, FIG. 3B to 3F, FIG. 4B to 4D, and FIG. 7A to 7F in the foregoing embodiments of the present invention are merely an optional display manner. In actual application, the dashed line areas may present another shape and another color and display another control component, other content, and the like. This is not limited herein.

To facilitate better implementation of the embodiment of the present invention, an embodiment of the present invention further provides a computer readable storage medium. The computer readable storage medium stores one or more computer programs. The computer readable storage medium may be a magnetic disk, a compact disc, a read-only memory (Read-Only Memory, ROM), or a random access memory (Random Access Memory, RAM). The one or more computer programs run on one or more processors in an electronic device. When the computer programs are running, a procedure of the foregoing method embodiment may be implemented. The electronic device includes a display and one or more application programs. The display includes a touch-sensitive surface and a display panel. When the computer programs are running, a computer may implement the following operations. The computer programs include:
an instruction for classifying, according to a preset rule, multiple multimedia files stored in the electronic device, to obtain at least a first multimedia file set, where the first multimedia file set includes icons that are respectively corresponding to multiple multimedia files meeting the preset rule;
an instruction for determining one or more multimedia files with a largest quantity of times of a historical user operation in the first multimedia file set as a coordinate file of the first multimedia file set; and
an instruction for performing special marking on the coordinate file to differentially display the coordinate file and another multimedia file in the first multimedia file set.

Optionally, the instruction for classifying, according to a preset rule, multiple multimedia files stored in the electronic device includes at least one of the following instructions:
an instruction for grouping, into a multimedia file set according to generation time of the multimedia files, multiple multimedia files that are stored in the electronic device, that are generated on a same date of a same month in a same year, and whose generation quantity in a first preset time period meets a preset condition;
an instruction for grouping, into a multimedia file set according to information about geographical locations at which the multimedia files are generated, multiple multimedia files that are stored in the electronic device and that have same geographical location information;
an instruction for grouping, into a multimedia file set according to generation time of the multimedia files, multiple multimedia files that are stored in the electronic device and that are generated on a same date of a same month;
an instruction for grouping, into a multimedia file set according to generation time of the multimedia files, multiple multimedia files that are stored in the electronic device and whose generation time points are in a second preset time period;
an instruction for grouping, into a multimedia file set according to content of the multimedia files, multiple multimedia files that include one or more specified objects; or
an instruction for grouping, into a multimedia file set according to labels of the multimedia files, multiple multimedia files that are stored in the electronic device and that have a same label.

Optionally, after the instruction for performing special marking on the coordinate file to differentially display the coordinate file and another multimedia file in the first multimedia file set is executed, the computer programs further include:
an instruction for adding, to the coordinate file, an icon marking the historical user operation.

Optionally, after the instruction for performing special marking on the coordinate file to differentially display the coordinate file and another multimedia file in the first multimedia file set is executed, the computer programs further include:
an instruction for receiving an operation performed by a user on one or more target multimedia files that do not belong to the first multimedia file set, and grouping the one or more target multimedia files into the first multimedia file set if the operation meets a preset first operation; or
an instruction for receiving an operation performed by a user on one or more target multimedia files in the first multimedia file set, and separating the one or more target multimedia files from the first multimedia file set if the operation meets a preset second operation, so that the one or more target multimedia files are no longer grouped into the first multimedia file set.

Optionally, the instruction for determining a multimedia file with a largest quantity of times of a historical user operation in the first multimedia file set as a coordinate file of the target classification file includes:
an instruction for determining, if there are multiple multimedia files with the largest quantity of times of the historical user operation in the first multimedia file set, a middlemost multimedia file as the coordinate file of the first multimedia file set according to generation time of the multimedia files.

Optionally, the special marking is specifically at least one of display by means of enlargement, display by adding a frame, display by adding a mark, display by using a special color, display by using a special pattern, or dynamic display.

Optionally, the instruction for performing special marking on the coordinate file to differentially display the coordinate file and another multimedia file in the first multimedia file set includes:
an instruction for hiding, under the coordinate file, the another multimedia file in the first multimedia file set other than the coordinate file, to differentially display the coordinate file and the another multimedia file in the first multimedia file set.

Optionally, the historical user operation is specifically at least one of viewing, editing, sharing, marking, or using.

In conclusion, according to the embodiments of the present invention, the electronic device classifies, according to the preset rule, the multiple multimedia files stored in the electronic device, to obtain each multimedia file set. In the first multimedia file set, the electronic device selects the multimedia file with the largest quantity of times of the historical user operation in the first multimedia file set as the coordinate file of the first multimedia file set, and performs special marking on the selected coordinate file to differentially display the coordinate file and the another multimedia file in the first multimedia file set by using the graphical user interface of the electronic device. When the user searches for a multimedia file in massive multimedia files, this can help the user quickly find the required multimedia file by using the coordinate file as a search clue, thereby improving multimedia file search efficiency, and bringing convenience to the user.

Further, the electronic device adds an icon mark to the coordinate file, to enrich information about the coordinate file. This further helps the user learn of a status of the coordinate file, so that the user quickly finds the required multimedia file by using the coordinate file. Furthermore, after the electronic device automatically classifies the multiple stored multimedia files, the user may manually perform adjustment. This helps the user adjust a classification display result, so that a defect of intelligent classification of the electronic device is remedied, and a personalized requirement of the user is met.

Although the present invention is described herein with reference to the embodiments, a protection scope of the present invention should not be limited. In a process of implementing the present invention that claims protection, a person skilled in the art may understand and implement all or some procedures in the foregoing embodiments by viewing the accompanying drawings, disclosed content, and the accompanying claims. Equivalent modifications made in accordance with the claims of the present invention shall fall within the scope of the present invention. In the claims, "comprising" does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect. A computer program may be stored/distributed in an appropriate medium such as an optical storage medium or a solid-state medium and be provided together with other hardware or be used as a part of hardware, or may be distributed in another manner, for example, by using the Internet (Internet), or another wired or wireless system.

## Claims

1. A multimedia file management method, applied to an electronic device, wherein the method comprises:
classifying, according to a preset rule, multiple multimedia files stored in the electronic device, to obtain at least a first multimedia file set, wherein the first multimedia file set comprises icons that are respectively corresponding to multiple multimedia files meeting the preset rule;
determining one or more multimedia files with a largest quantity of times of a historical user operation in the first multimedia file set as a coordinate file of the first multimedia file set; and
performing special marking on the coordinate file to differentially display the coordinate file and another multimedia file in the first multimedia file set.

2. The method according to claim 1, wherein the classifying, according to a preset rule, multiple multimedia files stored in the electronic device comprises at least one of the following operations:
grouping, into a multimedia file set according to generation time of the multimedia files, multiple multimedia files that are stored in the electronic device, that are generated on a same date of a same month in a same year, and whose generation quantity in a first preset time period meets a preset condition;
grouping, into a multimedia file set according to information about geographical locations at which the multimedia files are generated, multiple multimedia files that are stored in the electronic device and that have same geographical location information;
grouping, into a multimedia file set according to generation time of the multimedia files, multiple multimedia files that are stored in the electronic device and that are generated on a same date of a same month;
grouping, into a multimedia file set according to generation time of the multimedia files, multiple multimedia files that are stored in the electronic device and whose generation time points are in a second preset time period;
grouping, into a multimedia file set according to content of the multimedia files, multiple multimedia files that comprise one or more specified objects; or
grouping, into a multimedia file set according to labels of the multimedia files, multiple multimedia files that are stored in the electronic device and that have a same label.

3. The method according to claim 1 or 2, wherein after the performing special marking on the coordinate file to differentially display the coordinate file and another multimedia file in the first multimedia file set, the method further comprises:
adding, to the coordinate file, an icon marking the historical user operation.

4. The method according to any one of claims 1 to 3, wherein after the performing special marking on the coordinate file to differentially display the coordinate file and another multimedia file in the first multimedia file set, the method further comprises:
receiving an operation performed by a user on one or more target multimedia files that do not belong to the first multimedia file set, and grouping the one or more target multimedia files into the first multimedia file set if the operation meets a preset first operation; or
receiving an operation performed by a user on one or more target multimedia files in the first multimedia file set, and separating the one or more target multimedia files from the first multimedia file set if the operation meets a preset second operation, so that the one or more target multimedia files are no longer grouped into the first multimedia file set.

5. The method according to any one of claims 1 to 4, wherein the determining a multimedia file with a largest quantity of times of a historical user operation in the first multimedia file set as a coordinate file of the target classification file comprises:
if there are multiple multimedia files with the largest quantity of times of the historical user operation in the first multimedia file set, determining a middlemost multimedia file as the coordinate file of the first multimedia file set according to generation time of the multimedia files.

6. The method according to any one of claims 1 to 5, wherein the special marking is specifically at least one of display by means of enlargement, display by adding a frame, display by adding a mark, display by using a special color, display by using a special pattern, or dynamic display.

7. The method according to any one of claims 1 to 5, wherein the performing special marking on the coordinate file to differentially display the coordinate file and another multimedia file in the first multimedia file set comprises:
hiding, under the coordinate file, the another multimedia file in the first multimedia file set other than the coordinate file, to differentially display the coordinate file and the another multimedia file in the first multimedia file set.

8. The method according to any one of claims 1 to 7, wherein the historical user operation is specifically at least one of viewing, editing, sharing, marking, or using.

9. An electronic device, comprising a classification unit, an obtaining unit, a determining unit, and a management unit, wherein
the classification unit is configured to classify, according to a preset rule, multiple multimedia files stored in the electronic device;
the obtaining unit is configured to obtain at least a first multimedia file set according to a result of the classification by the classification unit, wherein the first multimedia file set comprises icons that are respectively corresponding to multiple multimedia files meeting the preset rule;
the determining unit is configured to determine one or more multimedia files with a largest quantity of times of a historical user operation in the first multimedia file set as a coordinate file of the first multimedia file set; and
the management unit is configured to perform special marking on the coordinate file to differentially display the coordinate file and another multimedia file in the first multimedia file set.

10. The electronic device according to claim 9, wherein the classification unit is specifically configured to perform at least one of the following operations:
grouping, into a multimedia file set according to generation time of the multimedia files, multiple multimedia files that are stored in the electronic device, that are generated on a same date of a same month in a same year, and whose generation quantity in a first preset time period meets a preset condition;
grouping, into a multimedia file set according to information about geographical locations at which the multimedia files are generated, multiple multimedia files that are stored in the electronic device and that have same geographical location information;
grouping, into a multimedia file set according to generation time of the multimedia files, multiple multimedia files that are stored in the electronic device and that are generated on a same date of a same month;
grouping, into a multimedia file set according to generation time of the multimedia files, multiple multimedia files that are stored in the electronic device and whose generation time points are in a second preset time period;
grouping, into a multimedia file set according to content of the multimedia files, multiple multimedia files that comprise one or more specified objects; or
grouping, into a multimedia file set according to labels of the multimedia files, multiple multimedia files that are stored in the electronic device and that have a same label.

11. The electronic device according to claim 9 or 10, wherein the electronic device further comprises:
a marking unit, configured to: after the management unit performs special marking on the coordinate file to differentially display the coordinate file and the another multimedia file in the first multimedia file set, add, to the coordinate file, an icon marking the historical user operation.

12. The electronic device according to any one of claims 9 to 11, wherein the electronic device further comprises:
a categorization unit, configured to: after the management unit performs special marking on the coordinate file to differentially display the coordinate file and the another multimedia file in the first multimedia file set, receive an operation performed by a user on one or more target multimedia files that do not belong to the first multimedia file set, and group the one or more target multimedia files into the first multimedia file set if the operation meets a preset first operation; or
after the management unit performs special marking on the coordinate file to differentially display the coordinate file and the another multimedia file in the first multimedia file set, receive an operation performed by a user on one or more target multimedia files in the first multimedia file set, and separate the one or more target multimedia files from the first multimedia file set if the operation meets a preset second operation, so that the one or more target multimedia files are no longer grouped into the first multimedia file set.

13. The electronic device according to any one of claims 9 to 12, wherein the determining unit is specifically configured to:
if there are multiple multimedia files with the largest quantity of times of the historical user operation in the first multimedia file set, determine a middlemost multimedia file as the coordinate file of the first multimedia file set according to generation time of the multimedia files.

14. The electronic device according to any one of claims 9 to 13, wherein the special marking is specifically at least one of display by means of enlargement, display by adding a frame, display by adding a mark, display by using a special color, display by using a special pattern, or dynamic display.

15. The electronic device according to any one of claims 9 to 13, wherein the management unit is specifically configured to:
hide, under the coordinate file, the another multimedia file in the first multimedia file set other than the coordinate file, to differentially display the coordinate file and the another multimedia file in the first multimedia file set.

16. The electronic device according to any one of claims 9 to 15, wherein the historical user operation is specifically at least one of viewing, editing, sharing, marking, or using.

17. An electronic device, wherein the electronic device comprises an input apparatus, an output apparatus, one or more processors, a memory, and one or more computer programs, and the one or more computer programs are stored in the memory and are configured for execution by the one or more processors, wherein
the one or more processors classify, according to a preset rule, multiple multimedia files stored in the electronic device, to obtain at least a first multimedia file set, wherein the first multimedia file set comprises icons that are respectively corresponding to multiple multimedia files meeting the preset rule;
the one or more processors determine one or more multimedia files with a largest quantity of times of a historical user operation in the first multimedia file set as a coordinate file of the first multimedia file set; and
the one or more processors perform special marking on the coordinate file to differentially display the coordinate file and another multimedia file in the first multimedia file set.

18. The electronic device according to claim 17, wherein that the one or more processors classify, according to a preset rule, multiple multimedia files stored in the electronic device comprises at least one of the following operations:
the one or more processors group, into a multimedia file set according to generation time of the multimedia files, multiple multimedia files that are stored in the electronic device, that are generated on a same date of a same month in a same year, and whose generation quantity in a first preset time period meets a preset condition;
the one or more processors group, into a multimedia file set according to information about geographical locations at which the multimedia files are generated, multiple multimedia files that are stored in the electronic device and that have same geographical location information;
the one or more processors group, into a multimedia file set according to generation time of the multimedia files, multiple multimedia files that are stored in the electronic device and that are generated on a same date of a same month;
the one or more processors group, into a multimedia file set according to generation time of the multimedia files, multiple multimedia files that are stored in the electronic device and whose generation time points are in a second preset time period;
the one or more processors group, into a multimedia file set according to content of the multimedia files, multiple multimedia files that comprise one or more specified objects; or
the one or more processors group, into a multimedia file set according to labels of the multimedia files, multiple multimedia files that are stored in the electronic device and that have a same label.

19. The electronic device according to claim 17 or 18, wherein after the one or more processors perform special marking on the coordinate file to differentially display the coordinate file and the another multimedia file in the first multimedia file set,
the one or more processors add, to the coordinate file, an icon marking the historical user operation.

20. The electronic device according to any one of claims 17 to 19, wherein after the one or more processors perform special marking on the coordinate file to differentially display the coordinate file and the another multimedia file in the first multimedia file set,
the one or more processors receive, by using the input apparatus, an operation performed by a user on one or more target multimedia files that do not belong to the first multimedia file set, and group the one or more target multimedia files into the first multimedia file set if the operation meets a preset first operation; or
the one or more processors receive, by using the input apparatus, an operation performed by a user on one or more target multimedia files in the first multimedia file set, and separate the one or more target multimedia files from the first multimedia file set if the operation meets a preset second operation, so that the one or more target multimedia files are no longer grouped into the first multimedia file set.

21. The electronic device according to any one of claims 17 to 20, wherein that the one or more processor determine a multimedia file with a largest quantity of times of a historical user operation in the first multimedia file set as a coordinate file of the target classification file comprises:
if there are multiple multimedia files with the largest quantity of times of the historical user operation in the first multimedia file set, the one or more processors determine a middlemost multimedia file as the coordinate file of the first multimedia file set according to generation time of the multimedia files.

22. The electronic device according to any one of claims 17 to 21, wherein the special marking is specifically at least one of display by means of enlargement, display by adding a frame, display by adding a mark, display by using a special color, display by using a special pattern, or dynamic display.

23. The electronic device according to any one of claims 17 to 21, wherein that the one or more processors perform special marking on the coordinate file to differentially display the coordinate file and the another multimedia file in the first multimedia file set comprises:
the one or more processors hide, under the coordinate file, the another multimedia file in the first multimedia file set other than the coordinate file, to differentially display the coordinate file and the another multimedia file in the first multimedia file set.

24. The electronic device according to any one of claims 17 to 23, wherein the historical user operation is specifically at least one of viewing, editing, sharing, marking, or using.

25. A graphical user interface on an electronic device, wherein the electronic device comprises a display, one or more user input devices, a memory, and one or more processors for executing one or more computer programs stored in the memory, and the graphical user interface comprises at least a first multimedia file icon indicating a first multimedia file and a second multimedia file icon indicating a second multimedia file or a folder;
the first multimedia file icon is displayed on the display in a first display manner, the second multimedia file icon is displayed on the display in a second display manner, and the first display manner is different from the second display manner;
a combination operation performed by a user for combining the second multimedia file icon with the first multimedia file icon is detected; and
in response to the detected combination operation, the first multimedia file icon is still displayed on the display in the first display manner, but displaying the second multimedia file icon is stopped.

26. The graphical user interface according to claim 25, wherein the graphical user interface further comprises the following function:
in response to a detected marking operation performed by the user on the first multimedia file icon, additionally displaying, on the display, an icon marking a historical user operation.

27. The graphical user interface according to claim 25 or 26, wherein the first display manner is specifically at least one of display by means of enlargement, display by adding a frame, display by adding a mark, display by using a special color, display by using a special pattern, or dynamic display.

28. The graphical user interface according to any one of claims 25 to 27, wherein the combination operation of combining the second multimedia file icon with the first multimedia file icon is specifically: dragging the second multimedia file icon to the first multimedia file icon.

29. The graphical user interface according to any one of claims 25 to 28, wherein an opening operation on the first multimedia file icon is specifically at least one of a pressing operation, a sliding operation, or a floating operation that meets a preset condition, and the opening operation is different from the combination operation.

30. A computer readable storage medium, wherein the computer readable storage medium stores one or more computer programs, the one or more computer programs comprise an instruction, an electronic device comprising a display and one or more application programs performs the method according to any one of claims 1 to 8 when the instruction is executed by the electronic device, and the display comprises a touch-sensitive surface and a display panel.
